# EUROPÄISCHE PATENTSCHRIFT

(11) **EP 2 499 400 B1**
(45) Veröffentlichungstag und Bekanntmachung des Hinweises auf die Patenterteilung: **20.11.2013**
(21) Anmeldenummer: 10768725.3
(22) Anmeldetag: 13.10.2010
(51) Int. Cl.: F16H 61/70, F16H 63/20

(54) **SCHALTVORRICHTUNG UND VERFAHREN ZUR SCHALTSTEUERUNG EINES AUTOMATISIERTEN GRUPPENGETRIEBES**
SHIFTING DEVICE AND METHOD FOR SHIFTING CONTROL OF AN AUTOMATED GROUP TRANSMISSION
DISPOSITIF DE COMMUTATION; ET PROCÉDÉ DE COMMANDE DE CHANGEMENT DE VITESSES DE DOUBLEUR DE GAMME AUTOMATISÉ

(30) Priorität: 11.11.2009 DE 102009046620
(43) Veröffentlichungstag der Anmeldung: 19.09.2012
(73) Patentinhaber: ZF Friedrichshafen AG, 88038 Friedrichshafen (DE)
(72) Erfinder: RENNER, Stefan, 78351 Bodman-Ludwigshafen (DE)
(86) Internationale Anmeldenummer: PCT/EP2010/065305
(87) Internationale Veröffentlichungsnummer: WO 2011/057873

(56) Entgegenhaltungen:
- EP-A2- 1 538 372
- DE-A1- 10 108 881
- DE-A1-102006 015 661
- DE-B3-102004 052 804

## Beschreibung

Die Erfindung betrifft ein automatisiertes Gruppengetriebe, mit einer Schaltvorrichtung, wobei das Gruppengetriebe ein Hauptgetriebe und eine diesem vorgeschaltete Splitgruppe mit mindestens einer gemeinsamen Vorgelegewelle umfasst, und dessen Splitgruppe als ein Doppelkupplungsgetriebe mit zwei koaxial angeordneten Eingangswellen ausgebildet ist, die jeweils eingangsseitig über eine zugeordnete Reibungskupplung mit der Triebwelle eines Antriebsmotors und ausgangsseitig über zumindest eine schaltbare Eingangsstufe mit der Vorgelegewelle verbindbar sind. Des Weiteren betrifft die Erfindung ein Verfahren zur Schaltsteuerung eines derartigen automatisierten Gruppengetriebes, bei dem ein Wechsel der lastführenden Eingangsstufe jeweils als Lastschaltung innerhalb der Splitgruppe erfolgt.

Mehrstufige Schaltgetriebe sind üblicherweise in Vorgelegebauweise ausgeführt und weisen demnach mehrere zwischen zwei achsparallelen Getriebewellen angeordnete Gangzahnradsätze mit jeweils einem auf der einen Getriebewelle drehfest angeordneten Festrad sowie einem auf der anderen Getriebewelle drehbar gelagerten und über eine zugeordnete Gangkupplung mit dieser verbindbaren Losrad auf. Die Losräder axial benachbarter Gangzahnradsätze sind zumeist paarweise auf einer gemeinsamen Getriebewelle angeordnet, so dass die zugeordneten Gangkupplungen jeweils paarweise in einem gemeinsamen Schaltpaket mit einer einzigen Schaltmuffe zusammengefasst sind.

Zur Schaltung, d.h. zum Einlegen einer bestimmten Gangstufe, muss die jeweilige Schaltmuffe aus ihrer mittleren Neutralstellung in Richtung des Losrades des betreffenden Gangzahnradsatzes bis in die jeweilige Schaltstellung und zum Auslegen dieser Gangstufe in Gegenrichtung zurück bis in die Neutralstellung axial verschoben werden. Hierzu kann eine Schaltstange pro Schaltpaket vorgesehen sein, die achsparallel zu den Getriebewellen angeordnet ist, axial verschiebbar ist, mit einer mit der zugeordneten Schaltmuffe in Eingriff befindlichen Schaltgabel versehen ist, und eine Mitnahmeöffnung zum Eingriff eines Schaltfingers einer Schaltwelle aufweist. Die Schaltwelle dient zur Einleitung und getriebeinternen Übertragung von Wähl- und Schaltbewegungen, wobei in einem Wählvorgang eine formschlüssige Stellverbindung zwischen der Schaltwelle und einer der Schaltstangen hergestellt wird, und in einem Schaltvorgang durch eine entsprechende Axialverschiebung der gekoppelten Schaltstange eine Gangstufe des betreffenden Schaltpakets ein- oder ausgelegt wird.

Wenn die Schaltwelle achsparallel zu den Getriebewellen und den Schaltstangen angeordnet ist, besteht ein Wählvorgang in einer Drehung der Schaltwelle um ihre Längsachse und ein Schaltvorgang in einer Axialverschiebung der Schaltwelle. Wenn die Schaltwelle dagegen tangential-normal zu den Getriebewellen und den Schaltstangen angeordnet ist, besteht ein Wählvorgang in einer Axialverschiebung der Schaltwelle und ein Schaltvorgang in einer Drehung der Schaltwelle um ihre Längsachse.

Bei einfachen Schaltgetrieben wird bei einem Wählvorgang entsprechend einem H- Schaltschema oder Mehrfach-H-Schaltschema die Stellverbindung zwischen der Schaltwelle und einer Schaltstange jeweils in deren Neutralstellung, d.h. bei ausgelegten Gangstufen, gelöst und hergestellt. Bei einem Doppelkupplungsgetriebe mit zwei koaxial angeordneten Eingangswellen, die eingangsseitig über jeweils eine zugeordnete Reibungskupplung mit der Triebwelle eines Antriebsmotors und ausgangsseitig über jeweils eine Gruppe von schaltbaren Gangzahnradsätzen mit der Ausgangswelle verbindbar sind, besteht jedoch bei Verwendung einer einzigen Schaltwelle die Notwendigkeit, die Stellverbindung zwischen der Schaltwelle und den Schaltstangen jeweils auch in den Schaltstellungen eingelegter Gangstufen zu lösen und wieder herstellen zu können, damit Schaltungen zwischen zwei Gangstufen, die unterschiedlichen Eingangswellen zugeordnet sind, als Lastschaltung, d.h. ohne Zugkraftunterbrechung, ausführbar sind.

Beispielsweise ist aus der DE 101 08 881 A1 ein automatisiertes Doppelkupplungsgetriebe mit zwei zusammen mit den koaxial angeordneten Eingangswellen V-förmig angeordneten Vorgelegewellen bekannt. Die Vorgelegewellen sind allgemein über jeweils zwei schaltbare Gangzahnradsätze, in einem Fall über nur einen schaltbaren Gangzahnradsatz, mit beiden Eingangswellen verbindbar. Der längeren zentralen Eingangswelle sind die Gangzahnradsätze der ungeraden Gänge und der kürzeren, als Hohlwelle ausgebildeten Eingangswelle die geraden Gänge sowie der Rückwärtsgang zugeordnet.

Die Schaltvorrichtung dieses bekannten Doppelkupplungsgetriebes umfasst vier jeweils mit der Schaltmuffe eines allgemein zwei Gangkupplungen umfassenden, in einem Fall nur eine Gangkupplung aufweisenden Schaltpakets in Stellverbindung stehende Schaltstangen und eine tangential-normal zu den Schaltstangen angeordnete sowie über einen Wählsteller axial verschiebbare und über einen Schaltsteller um ihre Längsachse drehbare Schaltwelle. Zur Ermöglichung von sequenziellen Lastschaltungen sind die Mitnahmeöffnungen der Schaltstangen derart ausgebildet, dass die Stellverbindung mit dem zugeordneten Schaltfinger der Schaltwelle jeweils in der Neutralstellung und den jeweils einem eingelegten Gang entsprechenden Schaltstellungen gelöst sowie hergestellt werden kann. Für die entsprechende Ansteuerung der Schaltwelle ist demnach ein Vier-Stellungs-Wählsteller zur Axialverschiebung der Schaltwelle in vier Wählstellungen und ein Drei-Stellungs-Schaltsteller zur Drehung der Schaltwelle in jeweils drei Schaltstellungen erforderlich. Die Queranordnung der Schaltwelle erfordert jedoch einen großen Bauraum und kann daher nicht immer zur Anwendung kommen.

In der DE 10 2004 052 804 B3 ist dagegen eine Schaltvorrichtung eines Doppelkupplungsgetriebes beschrieben, bei dem den Schaltstangen jedes Teilgetriebes eine eigene Schaltwelle zugeordnet ist. Die Schaltwellen sind jeweils achsparallel zu den Schaltstangen angeordnet und mittels eines Wählstellers um ihre Längsachse drehbar sowie mittels eines Schaltstellers axial verschiebbar. Durch eine Drehung einer dieser Schaltwellen um ihre Längsachse wird jeweils ein erster Schaltfinger aus dem Eingriff in einer Mitnahmeöffnung der einen zugeordneten Schaltstange gelöst und ein zweiter Schaltfinger mit einer Mitnahmeöffnung der anderen zugeordneten Schaltstange in Eingriff gebracht. Durch eine Axialverschiebung der Schaltwelle wird auch die gekoppelte Schaltstange axial verschoben und damit ein zugeordneter Gang ein- oder ausgelegt. Die den Wählvorgang bildende Drehbewegung der Schaltwelle zur Entkoppelung mit der einen und der Koppelung mit der anderen Schaltstange erfolgt jeweils in der Neutralstellung der Schaltstangen. Demzufolge sind pro Schaltwelle jeweils nur ein Zwei-Stellungs-Wählsteller und ein Drei-Stellungs-Schaltsteller erforderlich. Da die betreffenden Komponenten der Schaltvorrichtung jedoch doppelt vorhanden sein müssen, ist der Aufwand und der Platzbedarf dieser Schaltvorrichtung aber ungünstig hoch.

EP 1 538 372 A2 offenbart ein Doppelkupplungsgetriebe mit zwei koaxial angeordneten Eingangswellen, wobei jeder Eingangswelle jeweils eine achsparallel angeordnete und axial verschiebbare Schaltstange zugeordnet ist, die jeweils über eine Schaltgabel mit der Schaltmuffe eines zugeordneten Schaltpakets in Stellverbindung steht und mit mindestens einer Mitnahmeöffnung versehen ist, wobei eine Schaltwelle achsparallel zu den Schaltstangen angeordnet ist, die einen Schaltfinger zum Eingriff in die Mitnahmeöffnungen der Schaltstangen aufweist und mittels eines Wählstellers um ihre Längsachse drehbar sowie mittels eines Schaltstellers axial verschiebbar ist.

Die vorliegende Erfindung betrifft nun ein automatisiertes Gruppengetriebe mit einer Schaltvorrictung, wobei das Gruppengetriebe ein Hauptgetriebe und eine diesem vorgeschaltete Splitgruppe mit mindestens einer gemeinsamen Vorgelegewelle umfasst, und dessen Splitgruppe als ein Doppelkupplungsgetriebe mit zwei koaxial angeordneten Eingangswellen ausgebildet ist, die jeweils eingangsseitig über eine zugeordnete Reibungskupplung mit der Triebwelle eines Antriebsmotors und ausgangsseitig über ein oder zwei schaltbare Eingangsstufen mit der Vorgelegewelle verbindbar sind. Bei dieser Ausführung der Splitgruppe sind jeder Eingangswelle demnach mindestens eine und maximal zwei schaltbare Eingangsstufen zugeordnet, über die diese mit der mindestens einen gemeinsamen Vorgelegewelle in Triebverbindung bringbar sind. Zur Vermeidung einer Zug- oder Schubkraftunterbrechung sollte eine zugeordnete Schaltvorrichtung in Verbindung mit einem kostengünstigen und Platz sparenden Aufbau daher die Durchführung eines Wechsels der lastführenden Eingangsstufe als Lastschaltung ermöglichen, wozu die beiden Schaltpakete der Splitgruppe unabhängig voneinander schaltbar sein müssen.

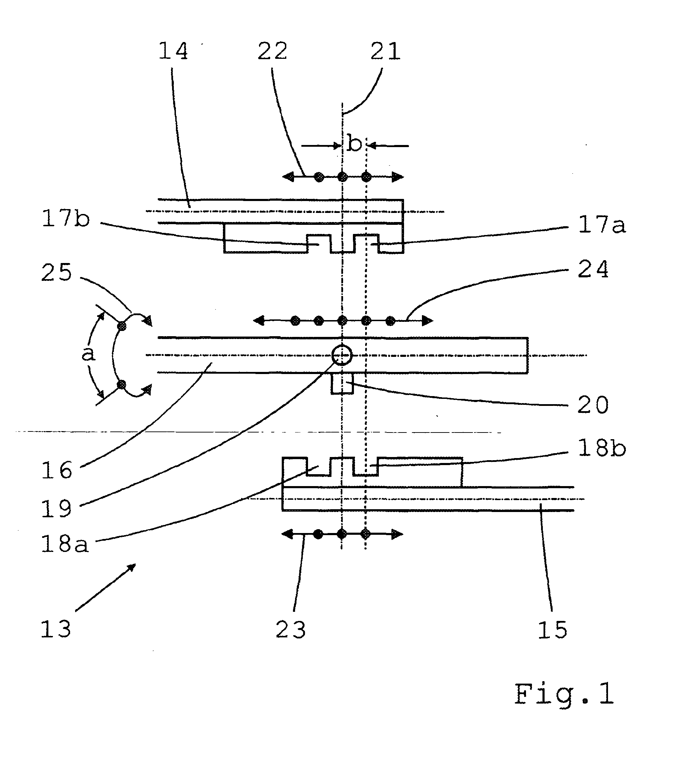

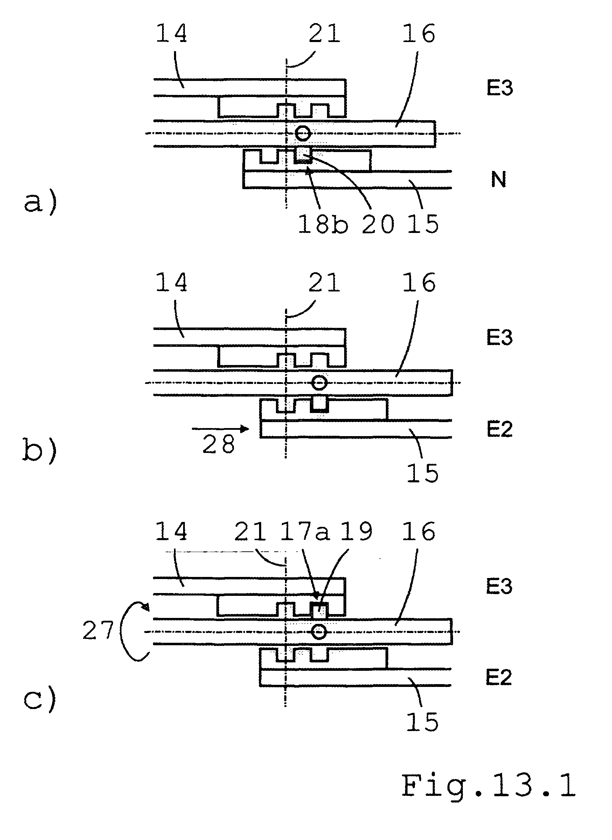

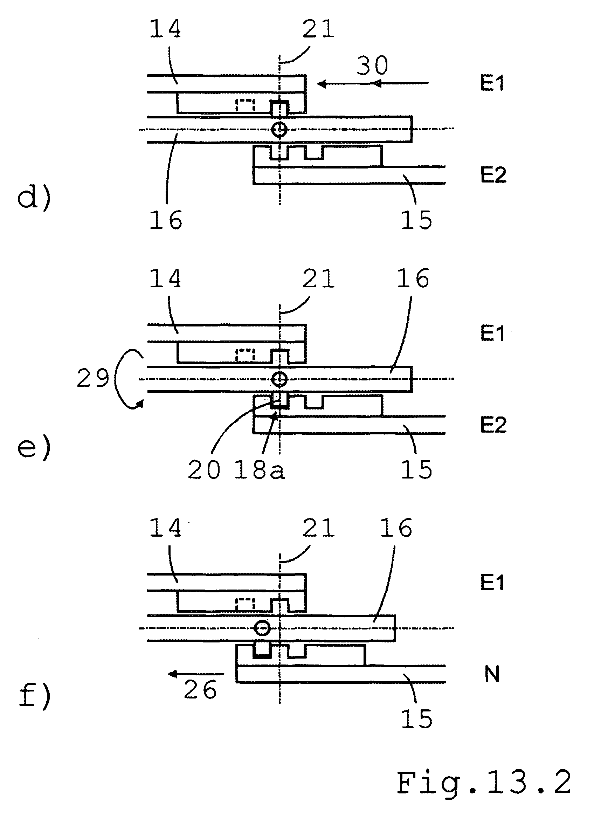

Ein derartiges Gruppengetriebe ist z.B. aus der DE 10 2006 015 661 A1 bekannt, wobei die dortige Fig. 1 eine Ausführungsvariante mit einer einzigen gemeinsamen Vorgelegewelle und die dortige Fig. 13 eine Ausführungsvariante mit zwei identischen gemeinsamen Vorgelegewellen zeigt. Die als Doppelkupplungsgetriebe ausgebildete Splitgruppe weist insgesamt drei schaltbare Eingangsstufen auf, von denen die axial mittig angeordnete Eingangsstufe über jeweils eine in einem anderen Schaltpaket angeordnete Schaltkupplung mit beiden Eingangswellen verbindbar ist. Informationen über den Aufbau und die Funktionsweise einer zugeordneten Schaltvorrichtung, insbesondere zum Wechsel der lastführenden Eingangsstufe, sind der DE 10 2006 015 661 A1 jedoch nicht zu entnehmen. Zwar könnte eine Schaltvorrichtung vorgesehen sein, bei der jedem der beiden Schaltpakete eine Schaltstange mit einem eigenen Drei-Stellungs-Schaltsteller zugeordnet ist, wodurch eine unabhängige Schaltung beider Schaltpakete möglich wäre. Eine derartige, relativ kostengünstige Ausführung einer Schaltvorrichtung ist aufgrund des dafür erforderlichen Bauraums jedoch nicht immer möglich.

Der vorliegenden Erfindung liegt daher die Aufgabe zugrunde, eine alternative Schaltvorrichtung eines automatisierten Gruppengetriebes der eingangs genannten Art vorzuschlagen, mit der die Schaltungen der als Doppelkupplungsgetriebe ausgebildeten Splitgruppe als Lastschaltungen durchführbar sind, und das gegenüber einer Ausführungsform mit zwei Schaltstellern eine Platz sparende Alternative darstellt.

Eine weitere Aufgabe der Erfindung besteht darin, ein Verfahren zur Schaltsteuerung eines derartigen automatisierten Gruppengetriebes anzugeben, bei dem ein Wechsel der lastführenden Eingangsstufe jeweils als Lastschaltung innerhalb der Splitgruppe erfolgt.

Die gegenständliche Aufgabe ist erfindungsgemäß in allgemeiner Form durch eine Schaltvorrichtung eines automatisierten Gruppengetriebes gelöst, das ein Hauptgetriebe und eine diesem vorgeschaltete Splitgruppe mit mindestens einer gemeinsamen Vorgelegewelle umfasst, und dessen Splitgruppe als ein Doppelkupplungsgetriebe mit zwei koaxial angeordneten Eingangswellen ausgebildet ist, die jeweils eingangsseitig über eine zugeordnete Reibungskupplung mit der Triebwelle eines Antriebsmotors und ausgangsseitig über zumindest eine schaltbare Eingangsstufe mit der Vorgelegewelle verbindbar sind, wobei jeder Eingangswelle jeweils eine achsparallel angeordnete und axial verschiebbare Schaltstange zugeordnet ist, die jeweils über eine Schaltgabel mit der Schaltmuffe eines zugeordneten Schaltpakets in Stellverbindung steht sowie mit mindestens einer Mitnahmeöffnung versehen ist, und wobei eine Schaltwelle achsparallel zu den Schaltstangen angeordnet ist, die mindestens einen Schaltfinger zum Eingriff in die Mitnahmeöffnungen der Schaltstangen aufweist und mittels eines Wählstellers um ihre Längsachse drehbar sowie mittels eines Schaltstellers axial verschiebbar ist.

Mit der erfindungsgemäßen Schaltvorrichtung lassen sich Schaltungen zum Wechsel der lastführenden Eingangsstufe innerhalb der Splitgruppe als Lastschaltung ausführen, sofern die Anzahl und die Anordnung der Mitnahmeöffnungen der Schaltstangen und der Schaltfinger der Schaltwelle in geeigneter Weise ausgebildet sind, und der Wählsteller sowie der Schaltsteller eine geeignete Verstellbarkeit aufweisen. Die konkrete Ausführung dieser Schaltvorrichtung richtet sich nach der Anzahl und der Anordnung der vorhandenen Eingangsstufen.

Bei einer universell einsetzbaren Ausführung der erfindungsgemäßen Schaltvorrichtung, die insbesondere für eine Splitgruppe mit zwei schaltbaren Eingangsstufen pro Eingangswelle vorgesehen ist, ist jede Schaltstange jeweils mit zwei Mitnahmeöffnungen versehen, die in etwa die Breite des zugeordneten Schaltfingers der Schaltwelle aufweisen und axial im doppelten Schaltwegabstand der Schaltpakete voneinander beabstandet sowie bezüglich der Neutralstellung der jeweiligen Schaltstange symmetrisch angeordnet sind, und ist die Schaltwelle in zwei um einen Wählwinkelabstand entfernte Wählstellungen, die jeweils einem Eingriff des zugeordneten Schaltfingers in eine Mitnahmeöffnung einer der Schaltstangen entsprechen, drehbar und in fünf Schaltstellungen axial verschiebbar, die axial im Schaltwegabstand der Schaltpakete voneinander beabstandet und bezüglich der Neutralstellung der Schaltwelle symmetrisch angeordnet sind.

Diese Schaltvorrichtung kann selbstverständlich auch baugleich bei einer Splitgruppe mit drei oder nur zwei schaltbaren Eingangsstufen verwendet werden, auch wenn dann nicht alle Mitnahmeöffnungen der Schaltstangen und Schaltstellungen der Schaltwelle benötigt werden. Durch die gegenüber versionsspezifischen Ausführungen der Schaltvorrichtung erhöhte Anzahl von Gleichteilen können sich jedoch hohe Einsparungen ergeben.

Bei einer ersten versionsspezifischen Ausführung der erfindungsgemäßen Schaltvorrichtung, die für eine Splitgruppe mit zwei einer der Eingangswellen zugeordneten Eingangsstufen und nur einer einzigen der anderen Eingangswelle zugeordneten Eingangsstufe vorgesehen ist, ist die dem zweistufigen Schaltpaket zugeordnete Schaltstange mit nur einer Mitnahmeöffnung versehen, die in etwa die Breite des zugeordneten Schaltfingers der Schaltwelle aufweist und axial im Schaltwegabstand des zugeordneten Schaltpakets in Schaltrichtung der Eingangsstufe des anderen Schaltpakets von der Neutralstellung der betreffenden Schaltstange angeordnet ist, ist die dem einstufigen Schaltpaket zugeordnete Schaltstange mit zwei Mitnahmeöffnungen versehen, die in etwa die Breite des zugeordneten Schaltfingers der Schaltwelle aufweisen und axial im doppelten Schaltwegabstand des zugeordneten Schaltpakets voneinander beabstandet und bezüglich der Neutralstellung der betreffenden Schaltstange symmetrisch angeordnet sind, und ist die Schaltwelle in zwei um einen Wählwinkelabstand entfernte Wählstellungen, die jeweils einem Eingriff des zugeordneten Schaltfingers in eine Mitnahmeöffnung einer der Schaltstangen entsprechen, drehbar und in vier Schaltstellungen axial verschiebbar, die axial im Schaltwegabstand der Schaltpakete voneinander beabstandet sind, von denen eine in der Neutralstellung der Schaltwelle liegt, zwei axial bezüglich der Neutralstellung der Schaltwelle auf der Seite der gemeinsamen Schaltrichtung beider Schaltpakete liegen, und eine axial bezüglich der Neutralstellung der Schaltwelle auf der Seite der nur in einem Schaltpaket vorhandenen Schaltrichtung liegt.

Bei einer zweiten versionsspezifischen Ausführung der erfindungsgemäßen Schaltvorrichtung, die für eine Splitgruppe mit zwei einer der Eingangswellen zugeordneten Eingangsstufen und nur einer der anderen Eingangswelle zugeordneten Eingangsstufe, von denen die axial mittig angeordnete Eingangsstufe beispielsweise als Anfahr-Eingangsstufe ausgebildet und irregulär auch mit der anderen Eingangswelle verbindbar ist, vorgesehen ist, ist die dem regulär zweistufigen Schaltpaket zugeordnete Schaltstange mit nur einer Mitnahmeöffnung versehen, die in etwa die Breite des zugeordneten Schaltfingers der Schaltwelle aufweist und axial im Schaltwegabstand des zugeordneten Schaltpakets in Schaltrichtung der regulären Eingangsstufe des anderen Schaltpakets bezüglich der Neutralstellung der betreffenden Schaltstange angeordnet ist, ist die dem irregulär zweistufigen Schaltpaket zugeordnete Schaltstange mit zwei Mitnahmeöffnungen versehen, die in etwa die Breite des zugeordneten Schaltfingers der Schaltwelle aufweisen und axial im doppelten Schaltwegabstand des Schaltpakets voneinander beabstandet und bezüglich der Neutralstellung der betreffenden Schaltstange symmetrisch angeordnet sind, und ist die Schaltwelle in zwei um einen Wählwinkelabstand entfernte Wählstellungen, die jeweils einem Eingriff des zugeordneten Schaltfingers in eine Mitnahmeöffnung einer der Schaltstangen entsprechen, drehbar und in vier Schaltstellungen axial verschiebbar, die im Schaltwegabstand der Schaltpakete axial voneinander beabstandet sind, von denen eine in der Neutralstellung der Schaltwelle liegt, zwei axial bezüglich der Neutralstellung der Schaltwelle auf der Seite der gemeinsamen regulären Schaltrichtung beider Schaltpakete liegen, und eine axial bezüglich der Neutralstellung der Schaltwelle auf der Seite der in dem einen Schaltpaket irregulär vorhandenen Schaltrichtung liegt.

Da Schaltungen in der Splitgruppe und in dem Hauptgetriebe üblicherweise seriell erfolgen, kann eine Umschaltvorrichtung vorgesehen sein, mittels der ein gemeinsamer Wählsteller des Hauptgetriebes und der Splitgruppe zwischen einer Stellverbindung mit einer Schaltwelle des Hauptgetriebes und der Schaltwelle der Splitgruppe umschaltbar ist. Gegenüber einer Ausführungsform der Schaltvorrichtung mit separaten Wählstellern wird somit ein Wählsteller eingespart.

Die verfahrenstechnische Aufgabe zur Durchführung eines Wechsels der lastführenden Eingangsstufe als Lastschaltung innerhalb der Splitgruppe ist erfindungsgemäß dadurch gelöst, dass bei einem Wechsel von einer der einen Eingangswelle zugeordneten Last-Eingangsstufe zu einer der anderen Eingangswelle zugeordneten Ziel-Eingangsstufe, ausgehend von einer Stellverbindung der Schaltwelle mit der in ihrer Neutralstellung befindlichen Schaltstange der nicht lastführenden Eingangswelle, zunächst diese Schaltstange um einen Schaltwegabstand bis in die Schaltstellung der Ziel-Eingangsstufe axial verschoben wird, daraufhin zeitlich überschnitten die der Last-Eingangsstufe zugeordnete Reibungskupplung geöffnet und die der Last-Eingangsstufe zugeordnete Reibungskupplung geschlossen wird, dann durch eine Drehung der Schaltwelle um den Wählwinkelabstand die Stellverbindung der Schaltwelle mit der Schaltstange der jetzt lastführenden Eingangswelle gelöst und eine Stellverbindung mit der Schaltstange der zuvor lastführenden Eingangswelle hergestellt wird, und abschließend diese Schaltstange um einen Schaltwegabstand bis in ihre Neutralstellung axial verschoben wird.

Durch das Auslegen der zuvor lastführenden Last-Eingangsstufe werden die Wälzverluste in dieser Eingangsstufe reduziert und die Betriebssicherheit im Hinblick auf eine mögliche Störung in der Getriebe- und Kupplungssteuerung erhöht.

Bei einem Wechsel von einer der einen Eingangswelle zugeordneten Last-Eingangsstufe zu einer derselben Eingangswelle zugeordneten Ziel-Eingangsstufe ist dagegen vorgesehen, dass in gleicher Weise zunächst eine Schaltung in eine der anderen Eingangswelle zugeordnete, vorzugsweise eine mittlere Übersetzung aufweisende Zwischen-Eingangsstufe und anschließend in gleicher Weise eine Schaltung in die Ziel-Eingangsstufe erfolgt, wobei die betreffende Schaltstange beim Umschalten des zugeordneten Schaltpakets von der Last-Eingangsstufe zu der Ziel-Eingangsstufe um den doppelten Schaltwegabstand axial verschoben wird.

Bei einer passiv schließbaren Ausbildung der Reibungskupplungen, wie z.B. einer Ausbildung als Membranfederkupplungen, ist in beiden vorgenannten Verfahrensabläufen jeweils vorgesehen, dass zuerst die der nicht lastführenden Eingangswelle zugeordnete Reibungskupplung geöffnet und abschließend die der zuvor lastführenden Eingangswelle zugeordnete Reibungskupplung geschlossen wird. Hierdurch wird die Energie zum Geöffnet halten der nicht lastführenden Reibungskupplung eingespart und die Betriebssicherheit im Hinblick auf eine mögliche Störung in der Getriebe- und Kupplungssteuerung erhöht.

Wenn die Splitgruppe mit zwei einer der Eingangswellen zugeordneten Eingangsstufen und nur einer der anderen Eingangswelle zugeordneten Eingangsstufe versehen ist, von denen die axial mittig angeordnete Eingangsstufe vorzugsweise als Anfahr-Eingangsstufe ausgebildet und irregulär auch mit der anderen Eingangswelle verbindbar ist, ist zu Beginn eines Anfahrvorgangs, ausgehend von beiden geöffneten Reibungskupplungen, einer in dem Schaltpaket der einen Schaltstange regulär eingelegten Anfahr-Eingangsstufe und einer Stellverbindung der Schaltwelle mit der in ihrer Neutralstellung befindlichen anderen Schaltstange, vorgesehen, dass diese Schaltstange um einen Schaltwegabstand bis in die Schaltstellung der irregulär eingelegten Anfahr-Eingangsstufe axial verschoben wird, und daraufhin beide Reibungskupplungen simultan zumindest teilweise geschlossen werden.

Durch die gleichzeitige Nutzung beider Reibungskupplungen als Anfahrkupplung wird deren thermische Belastung und mechanischer Verschleiß deutlich reduziert, so dass die Betriebsdauer der Reibungskupplungen dadurch wesentlich erhöht wird.

Im weiteren Verlauf des Anfahrvorgangs ist dann vorgesehen, dass zunächst die der Schaltstange der irregulär eingelegten Anfahr-Eingangsstufe zugeordnete Reibungskupplung geöffnet wird, dann diese Schaltstange um den doppelten Schaltwegabstand bis in die Schaltstellung der höheren Eingangsstufe desselben Schaltpakets axial verschoben wird, daraufhin zeitlich überschnitten die der Anfahr-Eingangsstufe zugeordnete Reibungskupplung geöffnet und die der höheren Eingangsstufe zugeordnete Reibungskupplung geschlossen wird, dann durch eine Drehung der Schaltwelle um den Wählwinkelabstand die Stellverbindung der Schaltwelle mit der Schaltstange der jetzt lastführenden Eingangswelle gelöst und eine Stellverbindung mit der Schaltstange der zuvor lastführenden Eingangswelle hergestellt wird, und abschließend diese Schaltstange um einen Schaltwegabstand bis in ihre Neutralstellung axial verschoben wird.

Zur Verdeutlichung der Erfindung ist der Beschreibung eine Zeichnung mit Ausführungsbeispielen beigefügt. In dieser zeigt
- Fig. 1: eine erste Ausführungsform der erfindungsgemäßen Schaltvorrichtung der Splitgruppe nach Fig. 2 und Fig. 3,
- Fig. 2: eine schematische Abbildung eines automatisierten Gruppengetriebes mit einer als Doppelkupplungsgetriebe ausgebildeten Splitgruppe mit vier schaltbaren Eingangsstufen E1, E2, E3 und E4,
- Fig. 3: das Schaltschema der Splitgruppe nach Fig. 2.
- Fig. 4: ein Schaltungsablauf zum Wechsel der lastführenden Eingangsstufe von E1 zu E2 innerhalb der Schaltvorrichtung nach Fig. 1,
- Fig. 5: ein Schaltungsablauf zum Wechsel der lastführenden Eingangsstufe von E2 zu E3 innerhalb der Schaltvorrichtung nach Fig. 1,
- Fig. 6: ein Schaltungsablauf zum Wechsel der lastführenden Eingangsstufe von E3 zu E4 innerhalb der Schaltvorrichtung nach Fig. 1,
- Fig. 7: ein Schaltungsablauf zum Wechsel der lastführenden Eingangsstufe von E4 zu E1 innerhalb der Schaltvorrichtung nach Fig. 1,
- Fig. 8: eine zweite Ausführungsform der erfindungsgemäßen Schaltvorrichtung der Splitgruppe nach Fig. 9 und Fig. 10,
- Fig. 9: eine schematische Abbildung eines automatisierten Gruppengetriebes mit einer als Doppelkupplungsgetriebe ausgebildeten Splitgruppe mit drei schaltbaren Eingangsstufen E1, E2 und E3,
- Fig. 10: das Schaltschema der Splitgruppe nach Fig. 9.
- Fig. 11: ein Schaltungsablauf zum Wechsel der lastführenden Eingangsstufe von E1 zu E2 innerhalb der Schaltvorrichtung nach Fig. 8,
- Fig. 12: ein Schaltungsablauf zum Wechsel der lastführenden Eingangsstufe von E2 zu E3 innerhalb der Schaltvorrichtung nach Fig. 8,
- Fig. 13: ein Schaltungsablauf zum Wechsel der lastführenden Eingangsstufe von E3 zu E1 innerhalb der Schaltvorrichtung nach Fig. 8,
- Fig. 14: eine dritte Ausführungsform der erfindungsgemäßen Schaltvorrichtung der Splitgruppe nach Fig. 15 und Fig. 16,
- Fig. 15: eine schematische Abbildung eines automatisierten Gruppengetriebes mit einer als Doppelkupplungsgetriebe ausgebildeten Splitgruppe mit drei schaltbaren Eingangsstufen E1, E2, E3,
- Fig. 16: das Schaltschema der Splitgruppe nach Fig. 15,
- Fig. 17: ein Schaltungsablauf zum Wechsel der lastführenden Eingangsstufe von E1 zu E2 innerhalb der Schaltvorrichtung nach Fig. 14,
- Fig. 18: ein Schaltungsablauf zum Wechsel der lastführenden Eingangsstufe von E2 zu E3 innerhalb der Schaltvorrichtung nach Fig. 14,
- Fig. 19: ein Schaltungsablauf zum Wechsel der lastführenden Eingangsstufe von E3 zu E1 innerhalb der Schaltvorrichtung nach Fig. 14, und
- Fig. 20: ein Schaltungsablauf zum Anfahren mit beiden Reibungskupplungen und dem anschließendem Wechsel der lastführenden Eingangsstufe von E1 zu E2 innerhalb der Schaltvorrichtung nach Fig. 14.

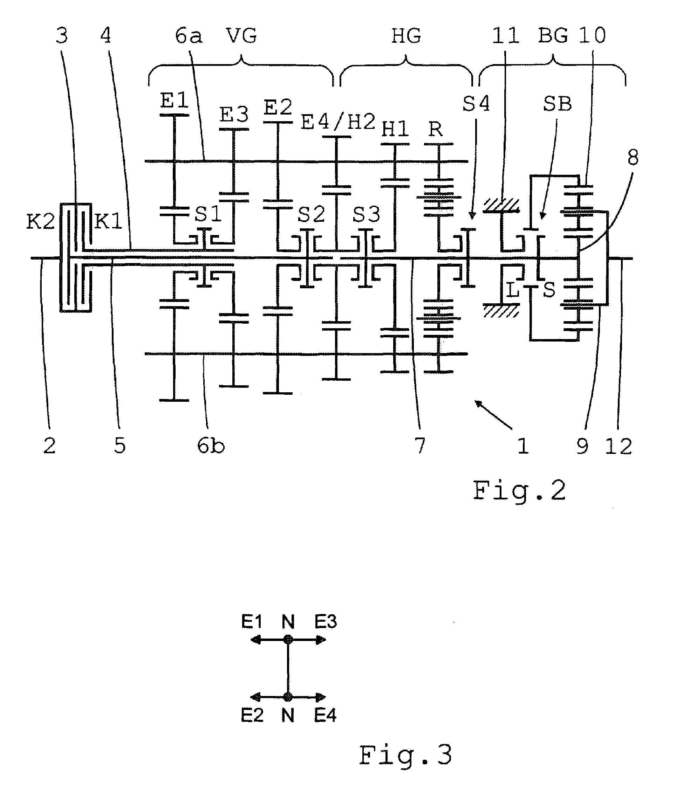

Ein in Fig. 2 schematisch abgebildetes automatisiertes Gruppengetriebe 1 umfasst ein Hauptgetriebe HG, eine diesem antriebstechnisch vorgeschaltete Splitgruppe VG und eine dem Hauptgetriebe HG nachgeordnete Bereichsgruppe BG. Die Splitgruppe VG ist als ein Doppelkupplungsgetriebe mit zwei koaxial angeordneten Eingangswellen 4, 5 ausgebildet.

Die kürzere erste Eingangswelle 4 ist als eine Hohlwelle ausgebildet und eingangsseitig über eine einen gemeinsamen Kupplungskorb 3 nutzende erste Reibungskupplung K1 mit der Triebwelle 2 eines nicht abgebildeten Antriebsmotors verbindbar. Ausgangsseitig ist die erste Eingangswelle 4 über zwei schaltbare Eingangsstufen E1, E3 mit zwei identischen Vorgelegewellen 6a, 6b verbindbar, wobei die betreffenden Losräder drehbar auf der ersten Eingangswelle 4 gelagert sind, und die zugeordneten Schaltkupplungen in einem gemeinsamen ersten Schaltpaket S1 zusammengefasst sind.

Die längere zweite Eingangswelle 5 ist koaxial innerhalb der ersten Eingangswelle 4 angeordnet und eingangsseitig über eine den gemeinsamen Kupplungskorb 3 nutzende zweite Reibungskupplung K1 mit der Triebwelle 2 des Antriebsmotors verbindbar. Ausgangsseitig ist die zweite Eingangswelle 5 über zwei schaltbare Eingangsstufen E2, E4 mit den beiden Vorgelegewellen 6a, 6b verbindbar, wobei die betreffenden Losräder drehbar auf der zweiten Eingangswelle 5 gelagert sind, und die zugeordneten Schaltkupplungen in einem gemeinsamen zweiten Schaltpaket S2 zusammengefasst sind.

Das Hauptgetriebe HG weist eine Hauptwelle 7 auf, die koaxial und axial benachbart zu der zweiten Eingangswelle 5 angeordnet ist. Die Hauptwelle 7 ist über zwei schaltbare Vorwärts-Hauptstufen H1, H2 und eine schaltbare Rückwärts-Hauptstufe R mit den beiden Vorgelegewellen 6a, 6b verbindbar. Die betreffenden Losräder dieser Gangstufen H1, H2, R sind drehbar auf der Hauptwelle 7 gelagert, wobei die Schaltkupplungen der Vorwärts-Hauptstufen H1, H2 in einem gemeinsamen dritten Schaltpaket S3 zusammengefasst sind, und die Schaltkupplung der Rückwärts-Hauptstufe R in einem vierten Schaltpaket S4 enthalten ist.

Die zweite Vorwärts-Hauptstufe H2 wird durch die vierte Eingangsstufe E4 der Splitgruppe VG gebildet, wenn der eingangsseitige Kraftfluss über eine der ersten drei Eingangsstufen E1, E2, E3 erfolgt, und die zugeordnete Schaltkupplung (S3) des Hauptgetriebes HG eingerückt ist. Zudem ergibt sich ein Direktgang zwischen der zweiten Eingangswelle 5 und der Hauptwelle 7, wenn die betreffenden Schaltkupplungen (S2, S3) der vierten Eingangsstufe E4 der Splitgruppe VG und der zweiten Vorwärts-Hauptstufe H2 des Hauptgetriebes HG eingerückt sind.

Die Bereichsgruppe BG ist als ein einfacher Planetenradsatz ausgebildet, dessen Sonnenrad 8 drehfest mit der Hauptwelle 7 verbunden ist, dessen Planetenträger 9 drehfest mit der Ausgangswelle 12 des Gruppengetriebes 1 verbunden ist, und dessen Hohlrad 10 mit einer Umschaltkupplung SB versehen ist. In einer ersten Schaltstellung L der Umschaltkupplung SB ist das Hohlrad 10 gegenüber einem Gehäusebauteil 11 arretiert, was eine Übersetzung in der Größenordnung von 2,5 bis 5,0 zwischen der Hauptwelle 7 und der Ausgangswelle 12 ergibt und einem geschalteten Langsamfahrbereich entspricht. In einer zweiten Schaltstellung S der Umschaltkupplung SB ist das Hohlrad 10 drehfest mit der Hauptwelle 7 gekoppelt, so dass der Planetenradsatz starr umläuft, was eine Übersetzung von 1,0 zwischen der Hauptwelle 7 und der Ausgangswelle 12 ergibt und einem geschalteten Schnellfahrbereich entspricht.

Somit weist das Gruppengetriebe 1 insgesamt sechzehn Vorwärtsgänge und theoretisch acht Rückwärtsgänge auf, wobei jedoch in der Praxis üblicherweise nicht alle möglichen Rückwärtsgänge genutzt werden. Das zugeordnete Schaltschema der Splitgruppe VG zur Schaltung der Eingangsstufen E1, E2, E3, E4 ist in Fig. 3 abgebildet, wobei mit dem Buchstaben N die Neutralstellung des Getriebes bezeichnet ist.

Eine zugeordnete Ausführungsform der erfindungsgemäßen Schaltvorrichtung 13, mit der ein Wechsel der lastführenden Eingangsstufe E1, E2, E3, E4 als Lastschaltung innerhalb der Splitgruppe VG durchführbar ist, ist in Fig. 1 in Einzelteilen dargestellt. Diese Schaltvorrichtung 13 umfasst zwei achsparallel benachbart zu den Eingangswellen 4, 5 angeordnete Schaltstangen 14, 15 und eine achsparallel zwischen den Schaltstangen 14, 15 angeordnete Schaltwelle 16. Die erste Schaltstange 14 ist der ersten Eingangswelle 4 zugeordnet und steht über eine nicht abgebildete Schaltgabel mit dem ersten Schaltpaket S1 in Stellverbindung. Die zweite Schaltstange 15 ist der zweiten Eingangswelle 5 zugeordnet und steht über eine nicht abgebildete Schaltgabel mit dem zweiten Schaltpaket S2 in Stellverbindung.

Beide Schaltstangen 14, 15 weisen jeweils zwei der Schaltwelle 16 radial zugewandte Mitnahmeöffnungen 17a, 17b; 18a, 18b auf. Die Schaltwelle 16 ist mit zwei Schaltfingern 19, 20 versehen, die vorliegend um etwa 90° umfangsseitig versetzt mit radialer Ausrichtung an der Schaltwelle 16 angeordnet sind. Die Schaltstangen 14, 15 und die Schaltwelle 16 sind in Fig. 1 in ihrer jeweiligen Neutralstellung abgebildet, die durch eine virtuelle gehäusefeste Radialebene 21 markiert ist. In der axialen Neutralstellung der Schaltstangen 14, 15 befinden sich die zugeordneten Schaltpakete jeweils in ihrer Neutralstellung N, in der die zugeordneten Eingangsstufen E1, E3; E2, E4 ausgelegt sind.

Einschließlich der jeweiligen Neutralstellung sind die Schaltstangen 14, 15 in jeweils drei Schaltstellungen axial verschiebbar, die um den üblicherweise identischen Schaltwegabstand b der Schaltpakete S1, S2 voneinander beabstandet und bezüglich der Neutralstellung symmetrisch angeordnet sind. Die Schaltstellungen der Schaltstangen 14, 15 sind in Fig. 1 in den zugeordneten Axialrichtungspfeilen 22, 23 jeweils durch ausgefüllte Kreissymbole markiert.

Die Mitnahmeöffnungen 17a, 17b, 18a, 18b der Schaltstangen 14, 15 weisen jeweils in etwa die Breite des zugeordneten Schaltfingers 19, 20 der Schaltwelle 16 auf und sind jeweils axial im doppelten Schaltwegabstand b der Schaltpakete S1, S2 voneinander beabstandet und bezüglich der Neutralstellung der jeweiligen Schaltstange 14, 15 symmetrisch angeordnet. Die Schaltwelle 16 ist einschließlich ihrer Neutralstellung in insgesamt fünf Schaltstellungen axial verschiebbar (Axialrichtungspfeil 24), die ebenfalls um den Schaltwegabstand b der Schaltpakete S1, S2 voneinander beabstandet und bezüglich der Neutralstellung symmetrisch angeordnet sind. Die Schaltstellungen der Schaltwelle 16 sind in dem zugeordneten Axialrichtungspfeil 24 durch ausgefüllte Kreissymbole markiert.

Die Schaltwelle 16 ist zudem zwischen zwei Wählstellungen, in denen sich jeweils ein Schaltfinger 19, 20 in Eingriff mit einer der Mitnahmeöffnungen 17a, 17b, 18a, 18b einer der Schaltstangen 14, 15 befindet, durch eine Drehung 25 um ihre Längsachse umschaltbar. Die beiden Wählstellungen der Schaltwelle 16 sind umfangsseitig um den Wählwinkelabstand a von vorliegend 90° voneinander beabstandet und in Fig. 1 in dem zugeordneten Drehrichtungspfeil 25 durch ausgefüllte Kreissymbole markiert. Demnach erfordert diese Ausführungsform der Schaltvorrichtung 13 einen Zwei-Stellungs-Wählsteller zur Drehung 25 der Schaltwelle 16 und einen Fünf-Stellungs-Schaltsteller zur Axialverschiebung 24 der Schaltwelle 16.

Die vorliegende Schaltvorrichtung 13 ist zwar für ein Splitgetriebe VG mit insgesamt vier schaltbaren Eingangsstufen E1, E2, E3, E4 mit jeweils zwei Eingangsstufen E1, E3; E2, E4 pro Eingangswelle 4, 5 konzipiert, sie kann aber in unveränderter Form auch bei Splitgetrieben eingesetzt werden, bei denen einer oder beiden Eingangswellen 4, 5 nur eine Eingangsstufe zugeordnet ist, selbst wenn dann nicht alle Mitnahmeöffnungen 17a, 17b; 18a, 18b der Schaltstangen 14, 15 und nicht alle Schaltstellungen (22, 23, 24) der Schaltstangen 14, 15 und der Schaltwelle 16 benutzt werden.

Es versteht sich in Kenntnis der Erfindung von selbst, dass die Neutralstellungen der beiden Schaltstangen 14, 15 nicht zwangsläufig in einer gemeinsamen Radialebene 21 liegen müssen, sondern auch axial beabstandet voneinander liegen können. In diesem Fall müssten allerdings auch die beiden Schaltfinger 19, 20 der Schaltwelle 16 in demselben axialen Abstand voneinander angeordnet sein.

Ebenso ist einsichtig, dass bei entsprechender Vergrößerung des Wählwinkelabstands b der Schaltwelle 16 und/oder bei einer umfangsseitig engeren Anordnung der beiden Schaltstangen 14, 15 um die Schaltwelle 16 eine umfangsseitig entsprechend engere Anordnung der beiden Schaltfinger 19, 20 möglich wäre, und bei einer Anordnung der Neutralstellungen beider Schaltstangen 14, 15 in einer gemeinsamen Radialebene 21 in diesem Fall sogar ein einziger Schaltfinger ausreichend sein könnte.

Die Funktion der erfindungsgemäßen Schaltvorrichtung 13 nach Fig. 1 wird nachfolgend anhand typischer Schaltvorgänge zum Wechsel der lastführenden Eingangsstufe E1, E2, E3, E4 in der Splitgruppe VG des Gruppengetriebes 1 nach Fig. 2 näher erläutert.

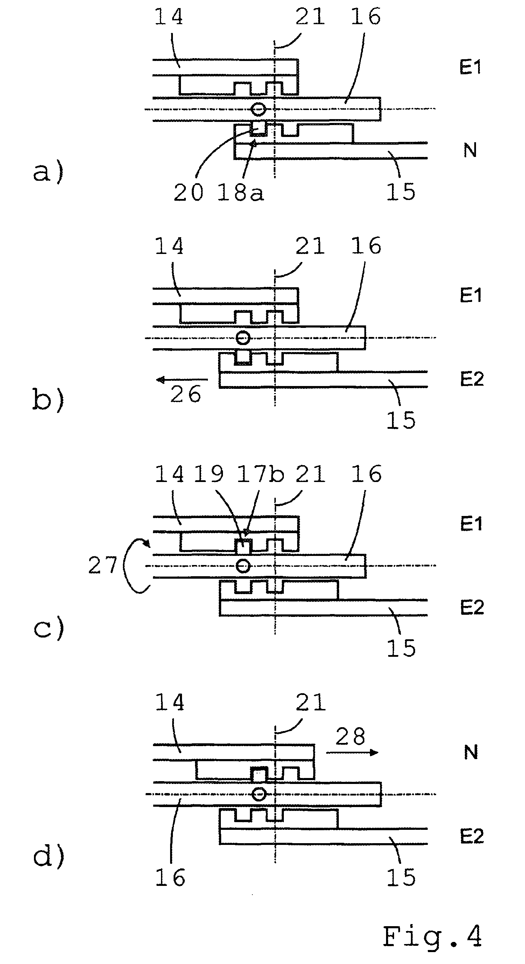

In Fig. 4a bis Fig. 4d ist ein als Lastschaltung ausgeführter Wechsel der lastführenden Eingangsstufe von der ersten Eingangsstufe E1 zu der zweiten Eingangsstufe E2 veranschaulicht. In der Ausgangslage der Schaltelemente 14, 15, 16 dieser Schaltung befindet sich die erste Schaltstange 14 in der Schaltstellung der ersten Eingangsstufe E1 und die zweite Schaltstange 15 in ihrer Neutralstellung N (siehe Fig. 4a). Demzufolge liegt die äußere Mitnahmeöffnung 17a der ersten Schaltstange 14 in der Bezugsebene 21, und die beiden Mitnahmeöffnungen 18a, 18b der zweiten Schaltstange 15 befinden sich symmetrisch axial beidseitig von der Bezugsebene 21. Die Schaltwelle 16 ist um einen Schaltwegabstand b in Richtung des ersten Schaltpakets S1 verschoben und in eine Wählstellung gedreht, in welcher der zweite Schaltfinger 20 in Eingriff mit der äußeren Mitnahmeöffnung 18a der zweiten Schaltstange 15 steht.

Nach dem bedarfsweisen Öffnen der zweiten Reibungskupplung K2 wird in einem ersten Schritt der Schaltung nach Fig. 4b die zweite Schaltstange 15 mittels der Schaltwelle 16 um einen Schaltwegabstand b in Richtung des ersten Schaltpakets S1 axial, in der Zeichnung nach links gemäß dem Pfeil 26 verschoben, wodurch die zweite Eingangsstufe E2 eingelegt, d.h. das zugeordnete Losrad drehfest mit der zweiten Eingangswelle 5 gekoppelt wird. Danach erfolgt der Wechsel der Kraftübertragung von der ersten Eingangsstufe E1 zu der zweiten Eingangsstufe E2, indem zeitlich überschnitten die erste Reibungskupplung K1 geöffnet und die zweite Reibungskupplung K2 geschlossen wird.

Anschließend wird die Schaltwelle 16 um einen Wählwinkelabstand a gemäß Pfeil 27 in Richtung zu der ersten Schaltstange 14 gedreht, wodurch die Stellverbindung der Schaltwelle 16 mit der zweiten Schaltstange 15 gelöst und der erste Schaltfinger 19 in Eingriff mit der inneren Mitnahmeöffnung 17b der ersten Schaltstange 14 gebracht wird (siehe Fig. 4c).

Abschließend wird die erste Schaltstange 14 mittels der Schaltwelle 16 um einen Schaltwegabstand b in Richtung des zweiten Schaltpakets S2 gemäß dem Pfeil 28 axial verschoben, wodurch die erste Eingangsstufe E1 ausgelegt, d.h. das zugeordnete Losrad von der ersten Eingangswelle 4 entkoppelt wird, und die erste Schaltstange 14 in ihre Neutralstellung N gebracht wird (siehe Fig. 4d). Bedarfsweise wird dann noch die erste Reibungskupplung K1 geschlossen.

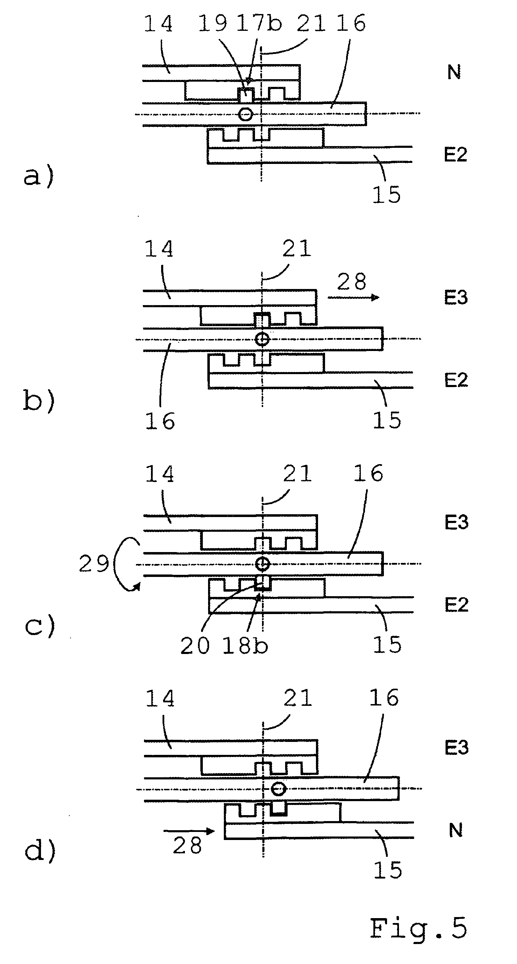

In Fig. 5a bis Fig. 5d ist ein als Lastschaltung ausgeführter Wechsel der lastführenden Eingangsstufe von der zweiten Eingangsstufe E2 zu der dritten Eingangsstufe E3 veranschaulicht, wobei die Ausgangslage der Schaltelemente 14, 15, 16 dieser Schaltung nach Fig. 5a der Endlage der zuvor beschriebenen Schaltung nach Fig. 4d entspricht.

Nach dem bedarfsweisen Öffnen der ersten Reibungskupplung K1 wird in einem ersten Schritt der Schaltung nach Fig. 5b die erste Schaltstange 14 mittels der Schaltwelle 16 um einen Schaltwegabstand b in Richtung des zweiten Schaltpakets S2 gemäß dem Pfeil 28 axial verschoben, wodurch die dritte Eingangsstufe E3 eingelegt wird. Danach erfolgt der Wechsel der Kraftübertragung von der zweiten Eingangsstufe E2 zu der dritten Eingangsstufe E3, indem zeitlich überschnitten die zweite Reibungskupplung K2 geöffnet und die erste Reibungskupplung K1 geschlossen wird.

Anschließend wird gemäß Fig. 5c die Schaltwelle 16 um einen Wählwinkelabstand a entsprechend dem Pfeil 29 in Richtung zu der zweiten Schaltstange 15 gedreht, wodurch die Stellverbindung der Schaltwelle 16 mit der ersten Schaltstange 14 gelöst und der zweite Schaltfinger 20 in Eingriff mit der inneren Mitnahmeöffnung 18b der zweiten Schaltstange 15 gebracht wird.

Abschließend wird die zweite Schaltstange 15 mittels der Schaltwelle 16 um einen Schaltwegabstand b gemäß dem Pfeil 28 in Richtung zu dem zweiten Schaltpaket S2 axial verschoben, wodurch die zweite Eingangsstufe E2 ausgelegt und die zweite Schaltstange 15 in ihre Neutralstellung N gebracht wird (siehe Fig. 5d). Bedarfsweise wird dann noch die zweite Reibungskupplung K2 geschlossen.

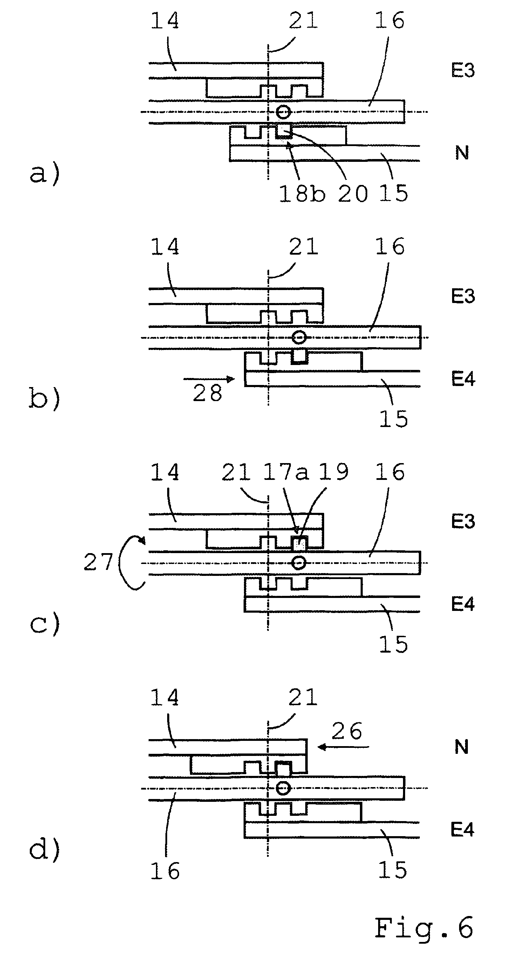

In Fig. 6a bis Fig. 6d ist ein als Lastschaltung ausgeführter Wechsel der lastführenden Eingangsstufe von der dritten Eingangsstufe E3 zu der vierten Eingangsstufe E4 veranschaulicht, wobei die Ausgangslage der Schaltelemente 14, 15, 16 dieser Schaltung nach Fig. 6a der Endlage der zuvor beschriebenen Schaltung nach Fig. 5d entspricht.

Nach dem bedarfsweisen Öffnen der zweiten Reibungskupplung K2 wird in einem ersten Schritt der Schaltung nach Fig. 6b die zweite Schaltstange 15 mittels der Schaltwelle 16 um einen Schaltwegabstand b in Richtung zu dem zweiten Schaltpaket S2 gemäß dem Pfeil 28 axial verschoben, wodurch die vierte Eingangsstufe E4 eingelegt wird. Danach erfolgt der Wechsel der Kraftübertragung von der dritten Eingangsstufe E3 zu der vierten Eingangsstufe E4, indem zeitlich überschnitten die erste Reibungskupplung K1 geöffnet und die zweite Reibungskupplung K2 geschlossen wird.

Anschließend wird die Schaltwelle 16 um einen Wählwinkelabstand a in Richtung zu der ersten Schaltstange 14 gemäß dem Pfeil 27 gedreht, wodurch die Stellverbindung der Schaltwelle 16 mit der zweiten Schaltstange 15 gelöst und der erste Schaltfinger 19 in Eingriff mit der äußeren Mitnahmeöffnung 17a der ersten Schaltstange 14 gebracht wird (siehe Fig. 6c).

Abschließend wird die erste Schaltstange 14 mittels der Schaltwelle 16 um einen Schaltwegabstand b in Richtung zu dem ersten Schaltpaket S1 gemäß dem Pfeil axial 26 verschoben, wodurch die dritte Eingangsstufe E3 ausgelegt und die erste Schaltstange 14 in ihre Neutralstellung N gebracht wird (siehe Fig. 6d). Bedarfsweise wird dann noch die erste Reibungskupplung K1 geschlossen.

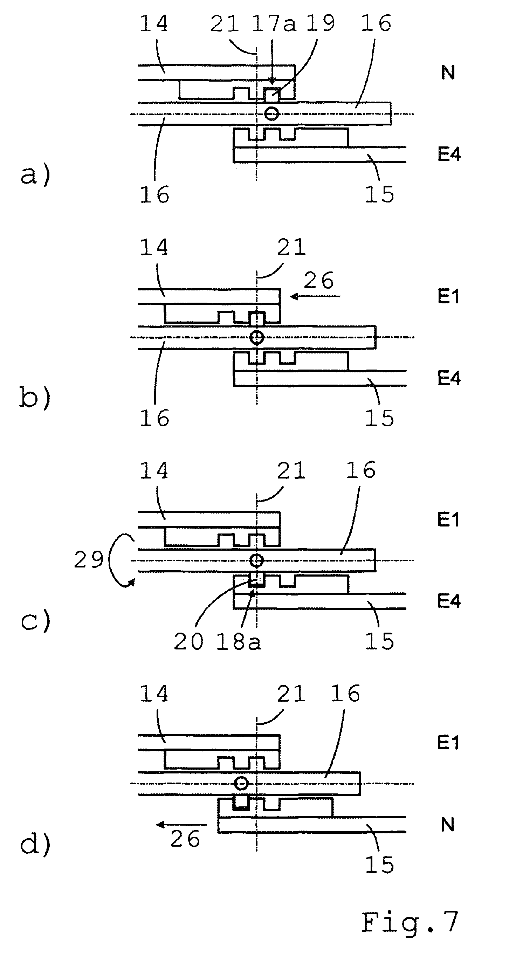

In Fig. 7a bis Fig. 7d ist ein als Lastschaltung ausgeführter Wechsel der lastführenden Eingangsstufe von der vierten Eingangsstufe E4 zu der ersten Eingangsstufe E1 veranschaulicht, der üblicherweise in Verbindung mit einer Hochschaltung innerhalb des Hauptgetriebes HG durchgeführt wird. Die Ausgangslage der Schaltelemente 14, 15, 16 dieser Schaltung nach Fig. 7a entspricht der Endlage der zuvor beschriebenen Schaltung nach Fig. 6d.

Nach dem bedarfsweisen Öffnen der ersten Reibungskupplung K1 wird in einem ersten Schritt der Schaltung nach Fig. 7b die erste Schaltstange 14 mittels der Schaltwelle 16 um einen Schaltwegabstand b in Richtung des ersten Schaltpakets S1 gemäß dem Pfeil 26 axial verschoben, wodurch die erste Eingangsstufe E1 eingelegt wird. Danach erfolgt der Wechsel der Kraftübertragung von der vierten Eingangsstufe E4 zu der ersten Eingangsstufe E1, indem zeitlich überschnitten die zweite Reibungskupplung K2 geöffnet und die erste Reibungskupplung K1 geschlossen wird.

Anschließend wird die Schaltwelle 16 um einen Wählwinkelabstand a in Richtung der zweiten Schaltstange 15 gemäß dem Pfeil 29 gedreht, wodurch die Stellverbindung der Schaltwelle 16 mit der ersten Schaltstange 14 gelöst und der zweite Schaltfinger 20 in Eingriff mit der äußeren Mitnahmeöffnung 18a der zweiten Schaltstange 15 gebracht wird (siehe Fig. 7c).

Abschließend wird die zweite Schaltstange 15 mittels der Schaltwelle 16 um einen Schaltwegabstand b in Richtung des ersten Schaltpakets S1 gemäß dem Pfeil 26 axial verschoben, wodurch die vierte Eingangsstufe E4 ausgelegt und die zweite Schaltstange 15 in ihre Neutralstellung N gebracht wird (siehe Fig. 7d). Bedarfsweise wird dann noch die zweite Reibungskupplung K2 geschlossen.

Zur Umkehrung der zuvor beschriebenen Schaltvorgänge, d.h. bei einem Wechsel der lastführenden Eingangsstufe von der zweiten Eingangsstufe E2 zu der ersten Eingangsstufe E1, von der dritten Eingangsstufe E3 zu der zweiten Eingangsstufe E2, von der vierten Eingangsstufe E4 zu der dritten Eingangsstufe E3, und von der ersten Eingangsstufe E1 zu der vierten Eingangsstufe E4, ist es nur erforderlich, die betreffenden Schaltschritte unter Umkehrung der jeweiligen Bewegungsrichtung der Axialverschiebungen und Drehbewegungen der Schaltwelle 16 in umgekehrter Reihenfolge durchzuführen.

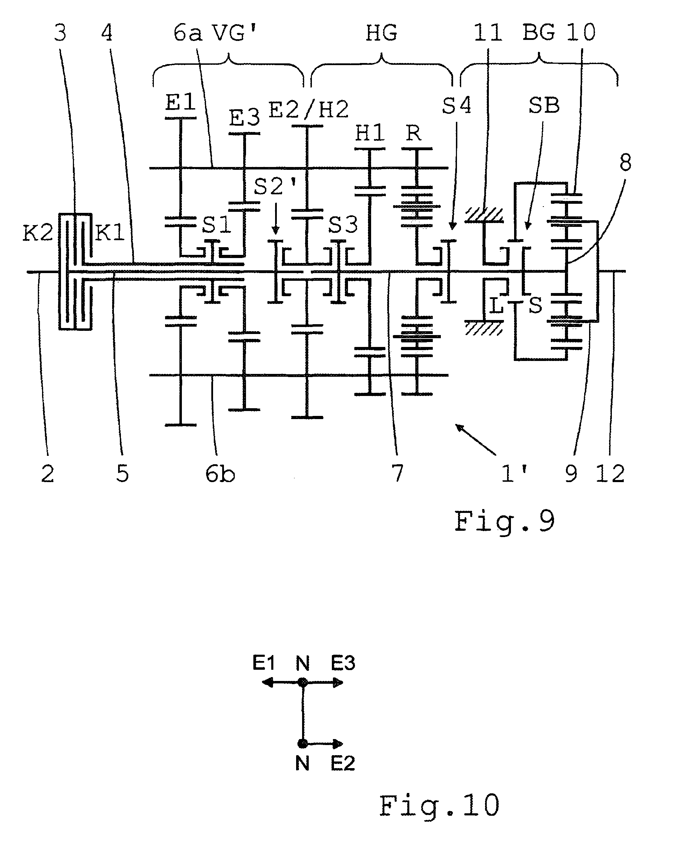

Ein in Fig. 9 schematisch abgebildetes automatisiertes Gruppengetriebe 1' unterscheidet sich von dem vorbeschriebenen Gruppengetriebe 1 nach Fig. 2 dadurch, dass die Splitgruppe VG' nunmehr nur drei schaltbare Eingangsstufen E1, E2, E3 aufweist. Hierzu ist die zweite, zentrale Eingangswelle 5 ausgangsseitig nur über eine einzige schaltbare Eingangsstufe E2, die hinsichtlich ihrer Übersetzung zwischen den beiden Eingangsstufen E1, E3 der ersten Eingangswelle 4 liegt, mit den beiden Vorgelegewellen 6a, 6b verbindbar ist. Demzufolge enthält das der zweiten Eingangswelle 5 zugeordnete Schaltpaket S2' nur die Schaltkupplung der zweiten Eingangsstufe E2. Aufgrund der Anordnung der Eingangsstufen E1, E2, E3 ist nunmehr die zweite Eingangsstufe E2 als zweite Vorwärts-Hauptstufe H2 wirksam, wenn der eingangsseitige Kraftfluss über die erste Eingangsstufe E1 oder die dritte Eingangsstufe E3 erfolgt, und die zugeordnete Schaltkupplung (S3) des Hauptgetriebes HG eingerückt ist.

Das Gruppengetriebe 1' weist demnach insgesamt zwölf Vorwärtsgänge und theoretisch sechs Rückwärtsgänge auf. Das zugeordnete Schaltschema der Splitgruppe VG' zur Schaltung der Eingangsstufen E1, E2, E3 ist in Fig. 10 abgebildet.

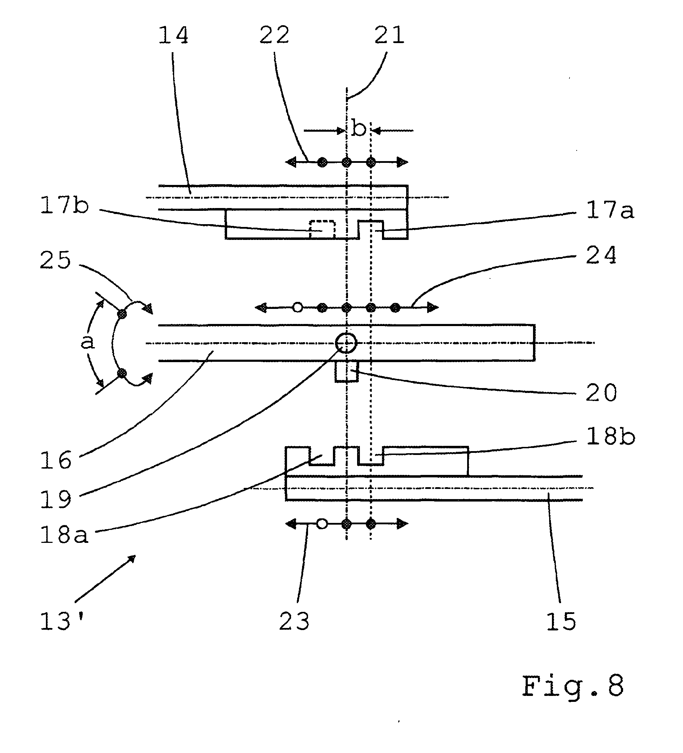

Eine zugeordnete Ausführung der erfindungsgemäßen Schaltvorrichtung 13', mit der ein Wechsel der lastführenden Eingangsstufe E1, E2, E3 als Lastschaltung innerhalb der Splitgruppe VG' durchführbar ist, ist Fig. 8 in Einzelteilen dargestellt. Diese Schaltvorrichtung 13' unterscheidet sich von der vorbeschriebenen Schaltvorrichtung 13 nach Fig. 1 nur dadurch, dass die innere Mitnahmeöffnung 17b der ersten Schaltstange 14 und die dem ersten Schaltpaket S1 zugewandte äußere Schaltstellung der Schaltwelle 16 nicht benötigt werden. Die in Fig. 8 nur gestrichelt dargestellt innere Mitnahmeöffnung 17b der ersten Schaltstange 14 kann daher wahlweise weggelassen oder zur Erzielung einer höheren Anzahl von Gleichteilen ohne Funktion beibehalten werden. Aufgrund des Wegfalls der in dem Axialrichtungspfeil 24 mit dem leeren Kreissymbol markierten Schaltstellung der Schaltwelle 16 ist bei dieser Schaltvorrichtung 13' ein weniger aufwendiger Vier-Stellungs-Schaltsteller ausreichend.

Die Funktion der erfindungsgemäßen Schaltvorrichtung 13' nach Fig. 8 wird nachfolgend anhand typischer Schaltvorgänge zum Wechsel der lastführenden Eingangsstufe E1, E2, E3 in der Splitgruppe VG' des Gruppengetriebes 1' nach Fig. 9 näher erläutert.

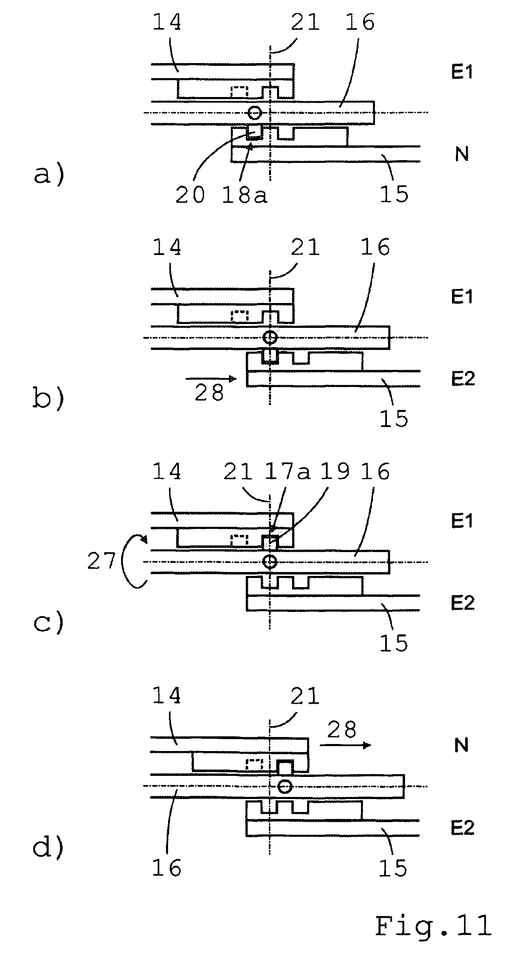

In Fig. 11 a bis Fig. 11 d ist ein als Lastschaltung ausgeführter Wechsel der lastführenden Eingangsstufe von der ersten Eingangsstufe E1 zu der zweiten Eingangsstufe E2 veranschaulicht. In der Ausgangslage der Schaltelemente 14, 15, 16 dieser Schaltung befinden sich die erste Schaltstange 14 in der Schaltstellung der ersten Eingangsstufe E1 und die zweite Schaltstange 15 in ihrer Neutralstellung N (siehe Fig. 11 a). Demzufolge liegt die äußere Mitnahmeöffnung 17a der ersten Schaltstange 14 in der Bezugsebene 21, und die Mitnahmeöffnungen 18a, 18b der zweiten Schaltstange 15 befinden sich symmetrisch axial beidseitig von der Bezugsebene 21. Die Schaltwelle 16 ist um einen Schaltwegabstand b in Richtung des ersten Schaltpakets S1 verschoben und in eine Wählstellung gedreht, in welcher der zweite Schaltfinger 20 in Eingriff mit der äußeren Mitnahmeöffnung 18a der zweiten Schaltstange 15 steht.

Nach dem bedarfsweisen Öffnen der zweiten Reibungskupplung K2 wird in einem ersten Schritt der Schaltung nach Fig. 11 b die zweite Schaltstange 15 mittels der Schaltwelle 16 um einen Schaltwegabstand b in Richtung des zweiten Schaltpakets S2' gemäß dem Pfeil 28 axial verschoben, wodurch die zweite Eingangsstufe E2 eingelegt wird. Danach erfolgt der Wechsel der Kraftübertragung von der ersten Eingangsstufe E1 zu der zweiten Eingangsstufe E2, indem zeitlich überschnitten die erste Reibungskupplung K1 geöffnet und die zweite Reibungskupplung K2 geschlossen wird.

Anschließend wird die Schaltwelle 16 um einen Wählwinkelabstand a in Richtung zu der ersten Schaltstange 14 gemäß dem Pfeil 27 gedreht, wodurch die Stellverbindung der Schaltwelle 16 mit der zweiten Schaltstange 15 gelöst und der erste Schaltfinger 19 in Eingriff mit der äußeren Mitnahmeöffnung 17a der ersten Schaltstange 14 gebracht wird (siehe Fig. 11 c).

Abschließend wird die erste Schaltstange 14 mittels der Schaltwelle 16 um einen Schaltwegabstand b in Richtung des zweiten Schaltpakets S2' gemäß dem Pfeil 28 axial verschoben, wodurch die erste Eingangsstufe E1 ausgelegt und die erste Schaltstange 14 in ihre Neutralstellung N gebracht wird (siehe Fig. 11 d). Bedarfsweise wird dann noch die erste Reibungskupplung K1 geschlossen.

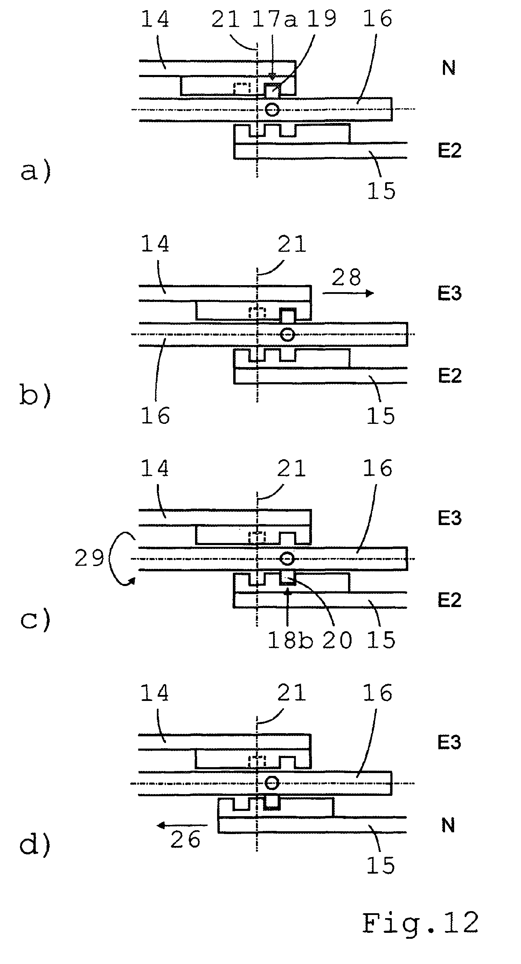

In Fig. 12a bis Fig. 12d ist ein als Lastschaltung ausgeführter Wechsel der lastführenden Eingangsstufe von der zweiten Eingangsstufe E2 zu der dritten Eingangsstufe E3 veranschaulicht, wobei die Ausgangslage der Schaltelemente 14, 15, 16 dieser Schaltung nach Fig. 12a der Endlage der zuvor beschriebenen Schaltung nach Fig. 11d entspricht.

Nach dem bedarfsweisen Öffnen der ersten Reibungskupplung K1 wird in einem ersten Schritt der Schaltung nach Fig. 12b die erste Schaltstange 14 mittels der Schaltwelle 16 um einen Schaltwegabstand b in Richtung zu dem zweiten Schaltpaket S2' gemäß dem Pfeil 28 axial verschoben, wodurch die dritte Eingangsstufe E3 eingelegt wird. Danach erfolgt der Wechsel der Kraftübertragung von der zweiten Eingangsstufe E2 zu der dritten Eingangsstufe E3, indem zeitlich überschnitten die zweite Reibungskupplung K2 geöffnet und die erste Reibungskupplung K1 geschlossen wird.

Anschließend wird die Schaltwelle 16 um einen Wählwinkelabstand a in Richtung der zweiten Schaltstange 15 gemäß dem Pfeil 29 gedreht, wodurch die Stellverbindung der Schaltwelle 16 mit der ersten Schaltstange 14 gelöst und der zweite Schaltfinger 20 in Eingriff mit der inneren Mitnahmeöffnung 18b der zweiten Schaltstange 15 gebracht wird (siehe Fig. 12c).

Abschließend wird die zweite Schaltstange 15 mittels der Schaltwelle 16 um einen Schaltwegabstand b in Richtung zum ersten Schaltpaket S1 axial verschoben 26, wodurch die zweite Eingangsstufe E2 ausgelegt und die zweite Schaltstange 15 in ihre Neutralstellung N gebracht wird (siehe Fig. 12d). Bedarfsweise wird dann noch die zweite Reibungskupplung K2 geschlossen.

In Fig. 13.1 a bis Fig. 13.2f ist ein als Lastschaltung ausgeführter Wechsel der lastführenden Eingangsstufe von der dritten Eingangsstufe E3 zu der ersten Eingangsstufe E1 veranschaulicht, der üblicherweise in Verbindung mit einer Hochschaltung innerhalb des Hauptgetriebes HG durchgeführt wird. Die Ausgangslage der Schaltelemente 14, 15, 16 dieser Schaltung nach Fig. 13.1 a entspricht der Endlage der zuvor beschriebenen Schaltung nach Fig. 12d.

Nach dem bedarfsweisen Öffnen der zweiten Reibungskupplung K2 wird in einem ersten Schritt der Schaltung nach Fig. 13.1 b die zweite Schaltstange 15 mittels der Schaltwelle 16 um einen Schaltwegabstand b in Richtung des zweiten Schaltpakets S2' gemäß dem Pfeil 28 axial verschoben, wodurch die zweite Eingangsstufe E2 eingelegt wird. Danach erfolgt der Wechsel der Kraftübertragung von der dritten Eingangsstufe E3 zu der zweiten Eingangsstufe E2, indem zeitlich überschnitten die erste Reibungskupplung K1 geöffnet und die zweite Reibungskupplung K2 zumindest teilweise geschlossen wird.

Anschließend wird die Schaltwelle 16 um einen Wählwinkelabstand a in Richtung zu der ersten Schaltstange 14 gemäß dem Pfeil 27 gedreht, wodurch die Stellverbindung der Schaltwelle 16 mit der zweiten Schaltstange 15 gelöst und der erste Schaltfinger 19 in Eingriff mit der äußeren Mitnahmeöffnung 17a der ersten Schaltstange 14 gebracht wird (siehe Fig. 13.1 c).

Dann wird die erste Schaltstange 14 mittels der Schaltwelle 16 um den doppelten Schaltwegabstand 2*b in Richtung zu den ersten Schaltpaket S1 gemäß dem Pfeil 30 axial verschoben, wodurch die dritte Eingangsstufe E3 ausgelegt und die erste Eingangsstufe E1 eingelegt wird (siehe Fig. 13.2d). Danach erfolgt der Wechsel der Kraftübertragung von der zweiten Eingangsstufe E2 zu der ersten Eingangsstufe E1, indem zeitlich überschnitten die zweite Reibungskupplung K2 geöffnet und die erste Reibungskupplung K1 geschlossen wird.

Daraufhin wird die Schaltwelle 16 um einen Wählwinkelabstand a in Richtung zu der zweiten Schaltstange 15 gemäß dem Pfeil 29 gedreht, wodurch die Stellverbindung der Schaltwelle 16 mit der ersten Schaltstange 14 gelöst und der zweite Schaltfinger 20 in Eingriff mit der äußeren Mitnahmeöffnung 18a der zweiten Schaltstange 15 gebracht wird (siehe Fig. 13.2e).

Abschließend wird die zweite Schaltstange 15 mittels der Schaltwelle 16 um einen Schaltwegabstand b in Richtung des ersten Schaltpakets S1 gemäß dem Pfeil 26 axial verschoben, wodurch die zweite Eingangsstufe E2 ausgelegt und die zweite Schaltstange 15 in ihre Neutralstellung N gebracht wird (siehe Fig. 13.2f). Bedarfsweise wird dann noch die zweite Reibungskupplung K2 geschlossen.

Zur Umkehrung der zuvor beschriebenen Schaltvorgänge, d.h. bei einem Wechsel der lastführenden Eingangsstufe von der zweiten Eingangsstufe E2 zu der ersten Eingangsstufe E1, von der dritten Eingangsstufe E3 zu der zweiten Eingangsstufe E2, und von der ersten Eingangsstufe E1 zu der dritten Eingangsstufe E3, ist es nur erforderlich, die betreffenden Schaltschritte unter Umkehrung der jeweiligen Bewegungsrichtung der Axialverschiebungen und Drehbewegungen der Schaltwelle 16 in umgekehrter Reihenfolge durchzuführen.

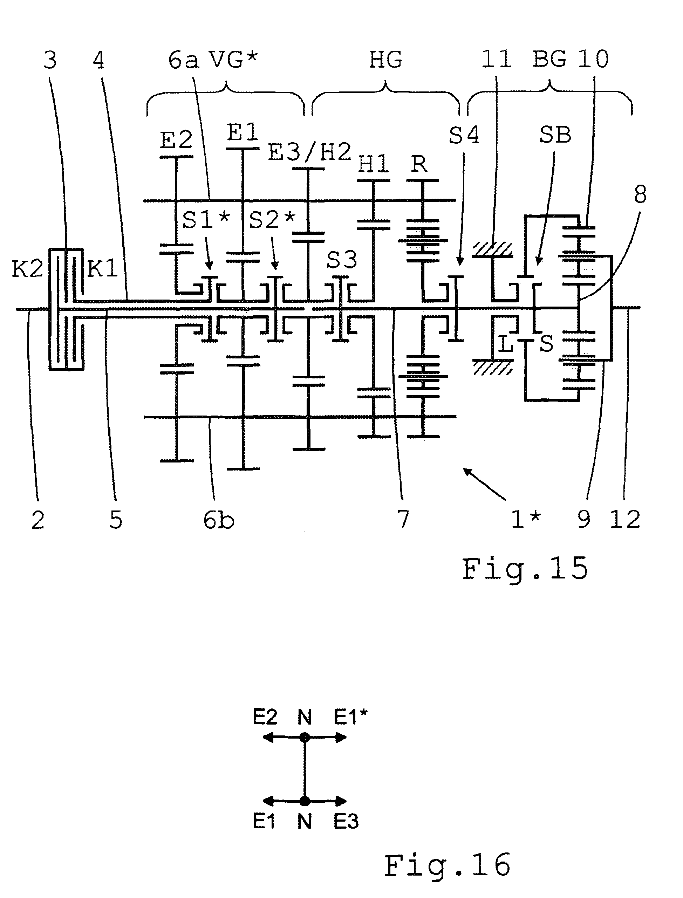

Ein in Fig. 15 schematisch abgebildetes automatisiertes Gruppengetriebe 1* unterscheidet sich von dem vorbeschriebenen Gruppengetriebe 1' nach Fig. 9 dadurch, dass die Zuordnung der Eingangsstufen E1, E2, E3 zu den Eingangswellen 4, 5 und damit zu den betreffenden Schaltpaketen S1*, S2* vertauscht ist. Außerdem ist die nun axial mittig angeordnete erste Eingangsstufe E1 irregulär, d.h. in bestimmten Sonderfunktionen, auch mit der ersten Eingangswelle 4 koppelbar.

Demzufolge weist das zweite Schaltpaket S2* zwei Schaltkupplungen zur regulären Schaltung der ersten Eingangsstufe E1 sowie der dritten Eingangsstufe E3 und das erste Schaltpaket S1* zwei Schaltkupplungen zur regulären Schaltung der zweiten Eingangsstufe E2 und zur irregulären Schaltung der ersten Eingangsstufe E1 auf. Aufgrund dieser Anordnung der Eingangsstufen E1, E2, E3 ist nun die dritte Eingangsstufe E3 zusätzlich als zweite Vorwärts-Hauptstufe H2 des Hauptgetriebes HG wirksam, wenn der eingangsseitige Kraftfluss über eine der ersten zwei Eingangsstufen E1, E2 erfolgt, und die zugeordnete Schaltkupplung (S3) des Hauptgetriebes HG eingerückt ist.

Auch dieses Gruppengetriebe 1* weist insgesamt zwölf Vorwärtsgänge und theoretisch sechs Rückwärtsgänge auf. Das zugeordnete Schaltschema der Splitgruppe VG* zur Schaltung der Eingangsstufen E1, E2, E3 ist in Fig. 16 abgebildet, wobei die irreguläre Schaltstellung der ersten Eingangsstufe E1 über das erste Schaltpaket S1* mit E1* bezeichnet ist.

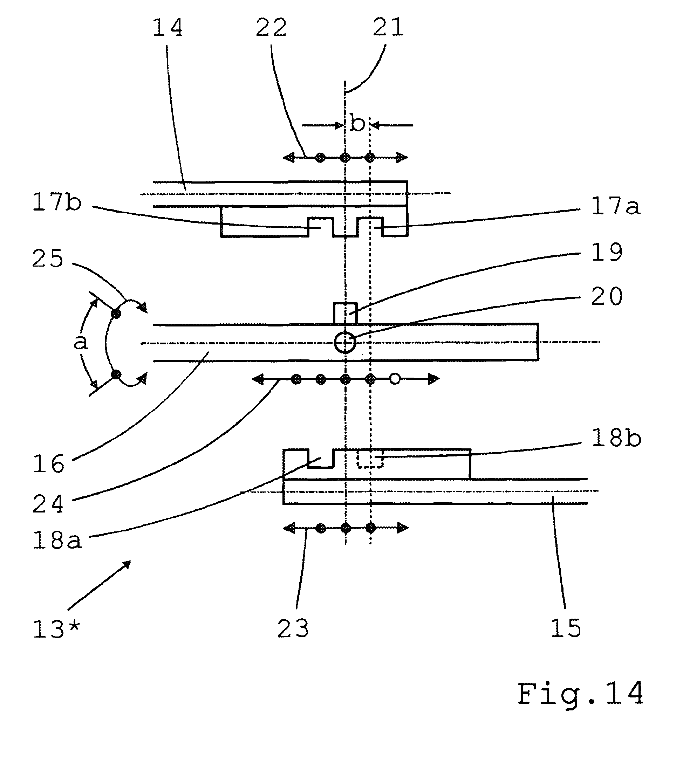

Eine zugeordnete Ausführung der erfindungsgemäßen Schaltvorrichtung 13*, mit der ein Wechsel der lastführenden Eingangsstufe E1, E2, E3 als Lastschaltung innerhalb der Splitgruppe VG* durchführbar ist, ist in Fig. 14 in Einzelteilen dargestellt. Diese Schaltvorrichtung 13* unterscheidet sich von der zuvor beschriebenen Schaltvorrichtung 13 nach Fig. 1 nur dadurch, dass die innere Mitnahmeöffnung 18b der zweiten Schaltstange 15 und die dem zweiten Schaltpaket S2* zugewandte äußere Schaltstellung der Schaltwelle 16 nicht benötigt werden. Die in Fig. 14 gestrichelt gezeichnete innere Mitnahmeöffnung 18b der zweiten Schaltstange 15 kann daher wahlweise weggelassen oder ohne Funktion beibehalten werden. Aufgrund des Wegfalls der in dem Axialrichtungspfeil 24 mit dem leeren Kreissymbol markierten Schaltstellung der Schaltwelle 16 ist auch bei dieser Schaltvorrichtung 13* nur ein Vier-Stellungs-Schaltsteller erforderlich.

Die Funktion der erfindungsgemäßen Schaltvorrichtung 13* nach Fig. 14 wird nachfolgend anhand typischer Schaltvorgänge zum Wechsel der lastführenden Eingangsstufe E1, E2, E3 in der Splitgruppe VG* des Gruppengetriebes 1* nach Fig. 15 sowie zum Anfahren mit beiden Reibungskupplungen K1, K2 und einem anschließendem Wechsel in die zweite Eingangsstufe E2 näher erläutert.

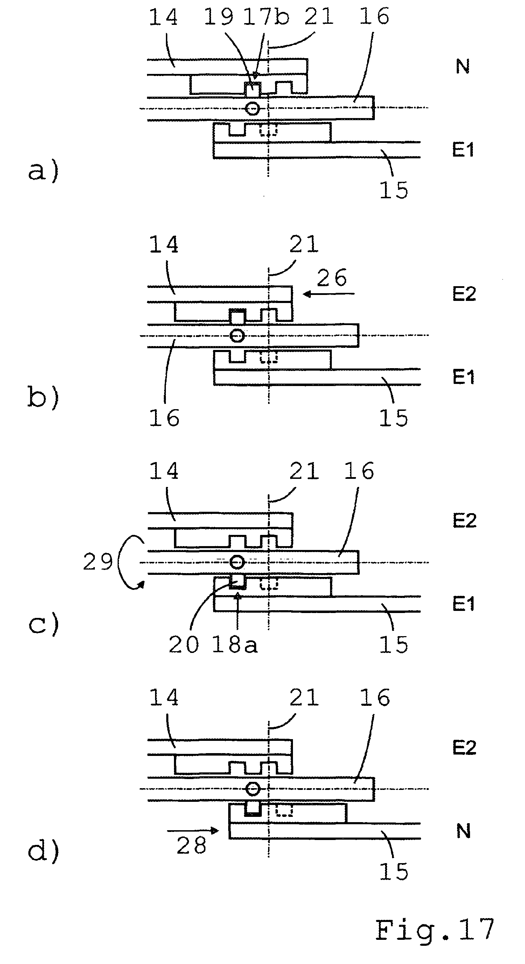

In Fig. 17a bis Fig. 17d ist ein als Lastschaltung ausgeführter Wechsel der lastführenden Eingangsstufe von der ersten Eingangsstufe E1 zu der zweiten Eingangsstufe E2 veranschaulicht. In der Ausgangslage der Schaltelemente 14, 15, 16 dieser Schaltung befinden sich die erste Schaltstange 14 in ihrer Neutralstellung N und die zweite Schaltstange in der Schaltstellung der ersten Eingangsstufe E1 (siehe Fig. 17a). Demzufolge liegt die innere Mitnahmeöffnung 18b der zweiten Schaltstange 15 in der Bezugsebene 21, und die Mitnahmeöffnungen 17a, 17b der ersten Schaltstange 14 befinden sich symmetrisch axial beidseitig von der Bezugsebene 21. Die Schaltwelle 16 ist um einen Schaltwegabstand b in Richtung zu dem ersten Schaltpaket S1* verschoben und in eine Wählstellung gedreht, in welcher der erste Schaltfinger 19 in Eingriff mit der inneren Mitnahmeöffnung 17b der ersten Schaltstange 14 steht.

Nach dem bedarfsweisen Öffnen der ersten Reibungskupplung K1 wird in einem ersten Schritt der Schaltung nach Fig. 17b die erste Schaltstange 14 mittels der Schaltwelle 16 um einen Schaltwegabstand b in Richtung zu dem ersten Schaltpaket S1* gemäß dem Pfeil 26 axial verschoben, wodurch die zweite Eingangsstufe E2 eingelegt wird. Danach erfolgt der Wechsel der Kraftübertragung von der ersten Eingangsstufe E1 zu der zweiten Eingangsstufe E2, indem zeitlich überschnitten die zweite Reibungskupplung K2 geöffnet und die erste Reibungskupplung K1 geschlossen wird.

Anschließend wird die Schaltwelle 16 um einen Wählwinkelabstand a in Richtung der zweiten Schaltstange 15 gemäß dem Pfeil 29 gedreht, wodurch die Stellverbindung der Schaltwelle 16 mit der ersten Schaltstange 14 gelöst und der zweite Schaltfinger 20 in Eingriff mit der äußeren Mitnahmeöffnung 18a der zweiten Schaltstange 15 gebracht wird (siehe Fig. 17c).

Abschließend wird die zweite Schaltstange 15 mittels der Schaltwelle 16 um einen Schaltwegabstand b in Richtung zu dem zweiten Schaltpaket S2* gemäß dem Pfeil 28 axial verschoben, wodurch die erste Eingangsstufe E1 ausgelegt wird, und die zweite Schaltstange 15 in ihre Neutralstellung N gebracht wird (siehe Fig. 17d). Bedarfsweise wird dann noch die zweite Reibungskupplung K2 geschlossen.

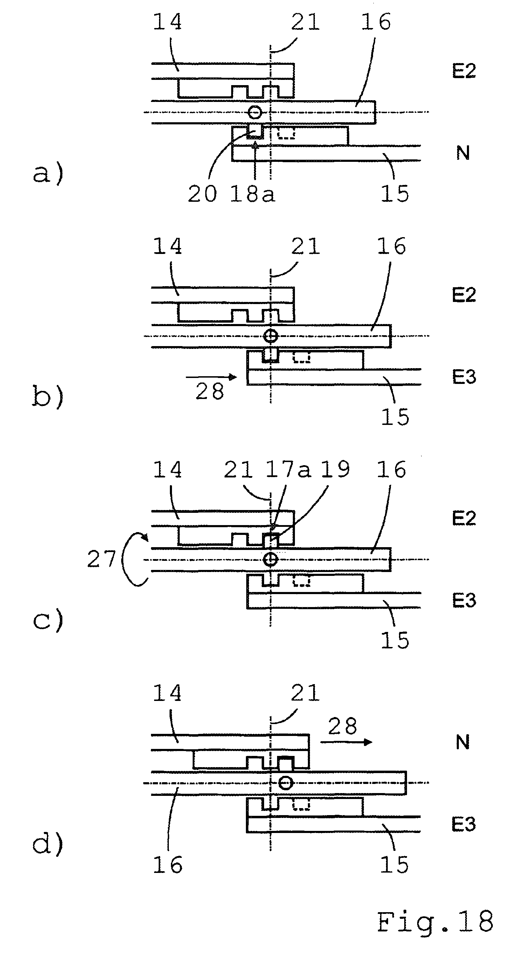

In Fig. 18a bis Fig. 18d ist ein als Lastschaltung ausgeführter Wechsel der lastführenden Eingangsstufe von der zweiten Eingangsstufe E2 zu der dritten Eingangsstufe E3 veranschaulicht, wobei die Ausgangslage der Schaltelemente 14, 15, 16 dieser Schaltung nach Fig. 18a der Endlage der zuvor beschriebenen Schaltung nach Fig. 17d entspricht.

Nach dem bedarfsweisen Öffnen der zweiten Reibungskupplung K2 wird in einem ersten Schritt der Schaltung nach Fig. 18b die zweite Schaltstange 15 mittels der Schaltwelle 16 um einen Schaltwegabstand b in Richtung des zweiten Schaltpakets S2* gemäß dem Pfeil 28 axial verschoben, wodurch die dritte Eingangsstufe E3 eingelegt wird. Danach erfolgt der Wechsel der Kraftübertragung von der zweiten Eingangsstufe E2 zu der dritten Eingangsstufe E3, indem zeitlich überschnitten die erste Reibungskupplung K1 geöffnet und die zweite Reibungskupplung K2 geschlossen wird.

Anschließend wird die Schaltwelle 16 um einen Wählwinkelabstand a in Richtung der ersten Schaltstange 14 gemäß dem Pfeil 27 gedreht, wodurch die Stellverbindung der Schaltwelle 16 mit der zweiten Schaltstange 15 gelöst und der erste Schaltfinger 19 in Eingriff mit der äußeren Mitnahmeöffnung 17a der ersten Schaltstange 14 gebracht wird (siehe Fig. 18c).

Abschließend wird die erste Schaltstange 14 mittels der Schaltwelle 16 um einen Schaltwegabstand b in Richtung zu dem zweiten Schaltpaket S2* gemäß dem Pfeil 28 axial verschoben, wodurch die zweite Eingangsstufe E2 ausgelegt und die erste Schaltstange 14 in ihre Neutralstellung N gebracht wird (siehe Fig. 18d). Bedarfsweise wird dann noch die erste Reibungskupplung K1 geschlossen.

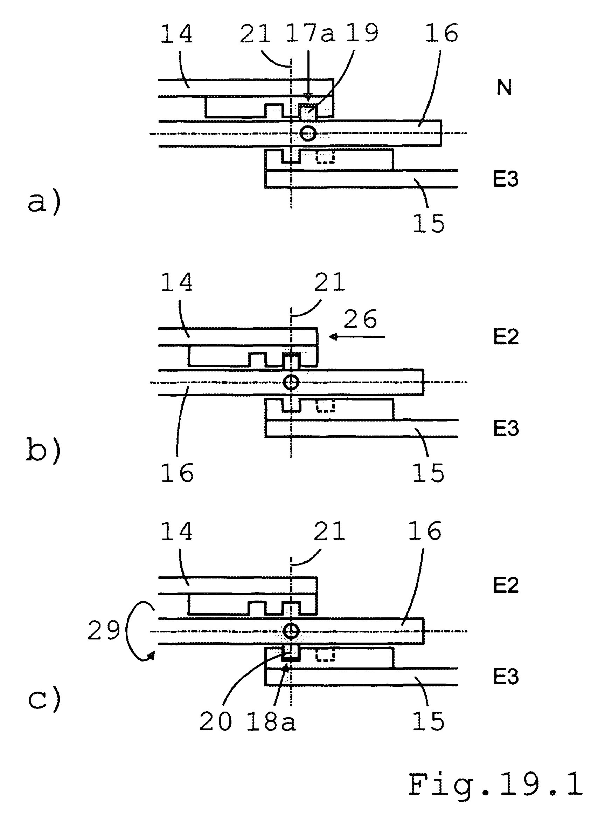

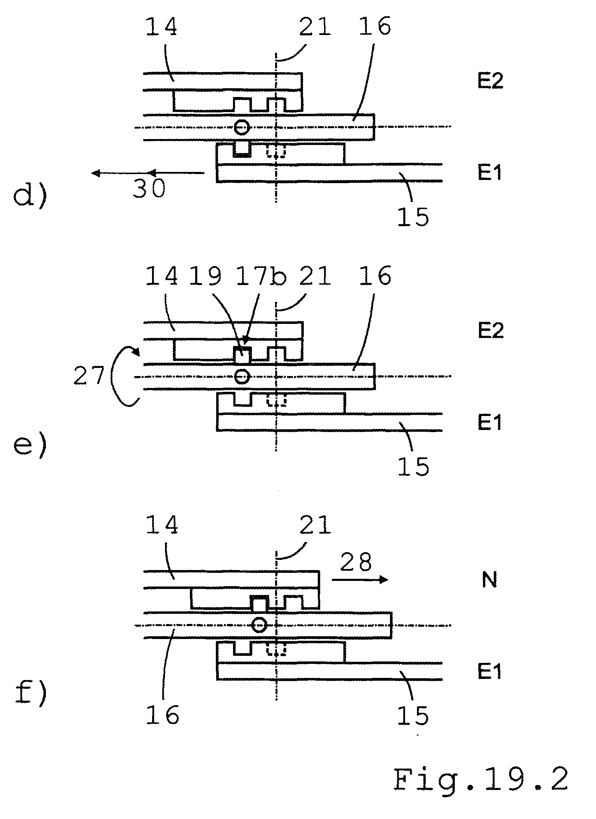

In Fig. 19.1 a bis Fig. 19.2f ist ein als Lastschaltung ausgeführter Wechsel der lastführenden Eingangsstufe von der dritten Eingangsstufe E3 zu der ersten Eingangsstufe E1 veranschaulicht, der üblicherweise in Verbindung mit einer Hochschaltung innerhalb des Hauptgetriebes HG durchgeführt wird. Die Ausgangslage der Schaltelemente 14, 15, 16 dieser Schaltung nach Fig. 19.1 a entspricht der Endlage der zuvor beschriebenen Schaltung nach Fig. 18d.

Nach dem bedarfsweisen Öffnen der ersten Reibungskupplung K1 wird in einem ersten Schritt der Schaltung nach Fig. 19.1 b die erste Schaltstange 14 mittels der Schaltwelle 16 um einen Schaltwegabstand b in Richtung zu dem ersten Schaltpaket S1* gemäß dem Pfeil 26 axial verschoben, wodurch die zweite Eingangsstufe E2 eingelegt wird. Danach erfolgt der Wechsel der Kraftübertragung von der dritten Eingangsstufe E3 zu der zweiten Eingangsstufe E2, indem zeitlich überschnitten die zweite Reibungskupplung K2 geöffnet und die erste Reibungskupplung K1 zumindest teilweise geschlossen wird.

Anschließend wird die Schaltwelle 16 um einen Wählwinkelabstand a in Richtung zu der zweiten Schaltstange 15 gemäß dem Pfeil 29 gedreht, wodurch die Stellverbindung der Schaltwelle 16 mit der ersten Schaltstange 14 gelöst und der zweite Schaltfinger 20 in Eingriff mit der äußeren Mitnahmeöffnung 18a der zweiten Schaltstange 15 gebracht wird (siehe Fig. 19.1c).

Dann wird die zweite Schaltstange 15 mittels der Schaltwelle 16 um den doppelten Schaltwegabstand 2*b in Richtung zu dem ersten Schaltpaket S1* gemäß dem Pfeil 30 axial verschoben, wodurch die dritte Eingangsstufe E3 ausgelegt und die erste Eingangsstufe E1 eingelegt wird (siehe Fig. 19.2d). Danach erfolgt der Wechsel der Kraftübertragung von der zweiten Eingangsstufe E2 zu der ersten Eingangsstufe E1, indem zeitlich überschnitten die erste Reibungskupplung K1 geöffnet und die zweite Reibungskupplung K2 geschlossen wird.

Daraufhin wird die Schaltwelle 16 um einen Wählwinkelabstand a in Richtung zu der ersten Schaltstange 14 gemäß dem Pfeil 27 gedreht, wodurch die Stellverbindung der Schaltwelle 16 mit der zweiten Schaltstange 15 gelöst und der erste Schaltfinger 19 in Eingriff mit der inneren Mitnahmeöffnung 17b der ersten Schaltstange 14 gebracht wird (siehe Fig. 19.2e).

Abschließend wird die erste Schaltstange 14 mittels der Schaltwelle 16 um einen Schaltwegabstand b in Richtung des zweiten Schaltpakets S2* gemäß dem Pfeil 28 axial verschoben, wodurch die zweite Eingangsstufe E2 ausgelegt und die erste Schaltstange 14 in ihre Neutralstellung N gebracht wird (siehe Fig. 19.2f). Bedarfsweise wird dann noch die erste Reibungskupplung K1 geschlossen.

Zur Umkehrung der zuvor beschriebenen Schaltvorgänge, d.h. bei einem Wechsel der lastführenden Eingangsstufe von der zweiten Eingangsstufe E2 zu der ersten Eingangsstufe E1, von der dritten Eingangsstufe E3 zu der zweiten Eingangsstufe E2, und von der ersten Eingangsstufe E1 zu der dritten Eingangsstufe E3, ist es nur erforderlich, die betreffenden Schaltschritte unter Umkehrung der jeweiligen Bewegungsrichtung der Axialverschiebungen und Drehbewegungen der Schaltwelle 16 in umgekehrter Reihenfolge durchzuführen.

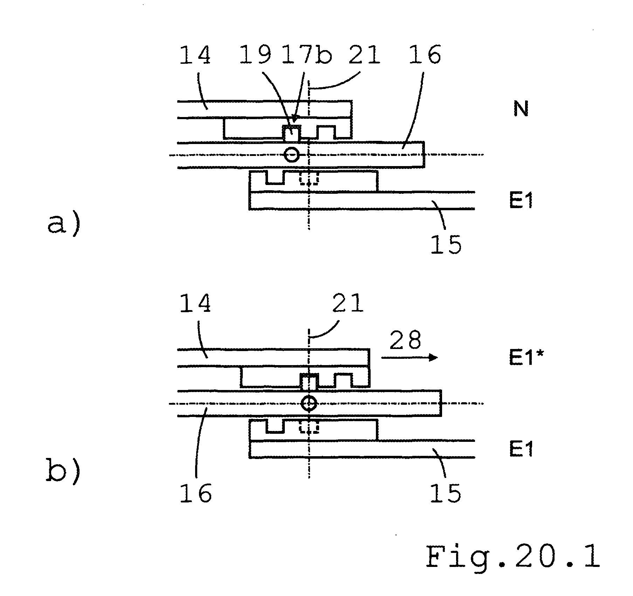

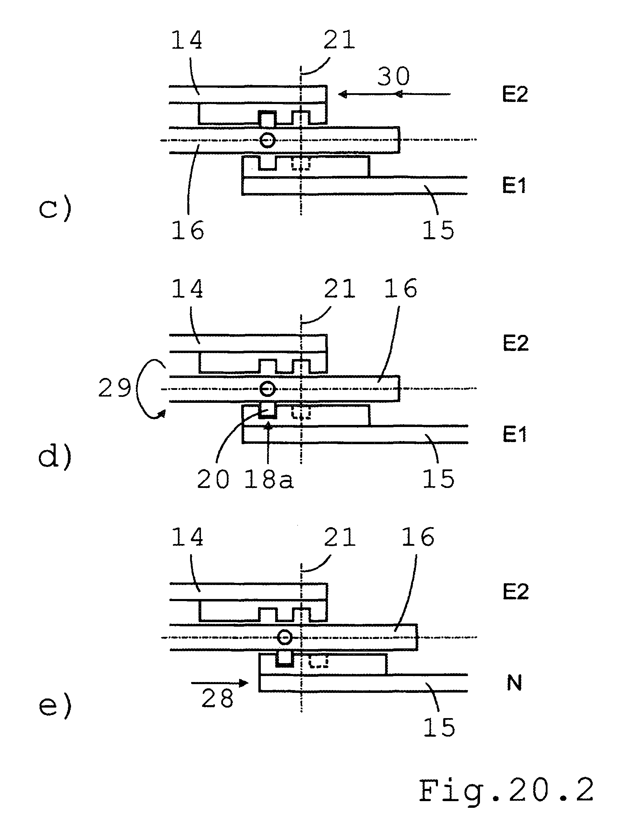

In Fig. 20.1 a bis Fig. 20.2e ist die Schaltung zum Anfahren mit beiden Reibungskupplungen K1, K2 über die erste Eingangsstufe E1 und der zum weiteren Anfahren als Lastschaltung ausgeführte Wechsel in die zweite Eingangsstufe E2 veranschaulicht, wobei die Ausgangslage der Schaltelemente 14, 15, 16 dieser Schaltung nach Fig. 20.1 a der Ausgangslage der zuvor beschriebenen Schaltung nach Fig. 17f entspricht.

Zum Starten des Antriebsmotors wird bedarfsweise zuerst die zweite Reibungskupplung K2 geöffnet. Zur Ermöglichung der zusätzlichen Nutzung der ersten Reibungskupplung K1 als Anfahrkupplung wird diese bedarfsweise zunächst geöffnet. Dann wird die erste Schaltstange 14 mittels der Schaltwelle 16 um einen Schaltwegabstand b in Richtung zu dem zweiten Schaltpaket S2* gemäß dem Pfeil 28 axial verschoben, wodurch die erste Eingangsstufe E1 auch in dem ersten Schaltpaket S1* eingelegt und somit mit der ersten Eingangswelle 4 gekoppelt wird (siehe Fig. 20.1 b). Anschließend erfolgt die erste Phase des Anfahrens durch simultanes Schließen beider Reibungskupplungen K1, K2.

Zur weiteren Beschleunigung des betreffenden Kraftfahrzeugs während des Anfahrvorgangs wird dann zunächst die erste Reibungskupplung K1 geöffnet und dann die erste Schaltstange 14 mittels der Schaltwelle 16 um den doppelten Schaltwegabstand 2*b in Richtung des ersten Schaltpakets S1* gemäß dem Pfeil 30 axial verschoben, wodurch die Koppelung der ersten Eingangsstufe E1 mit der ersten, hohlzylindrischen Eingangswelle 4 gelöst und die zweite Eingangsstufe E2 eingelegt wird (siehe Fig. 20.2c). Danach erfolgt der Wechsel der Kraftübertragung von der ersten Eingangsstufe E1 (und der zweiten Eingangswelle 5) zu der zweiten Eingangsstufe E2 (und der ersten Eingangswelle 4), indem zeitlich überschnitten die zweite Reibungskupplung K2 geöffnet und die erste Reibungskupplung K1 geschlossen wird.

Anschließend wird die Schaltwelle 16 um einen Wählwinkelabstand a in Richtung zu der zweiten Schaltstange 15 gemäß dem Pfeil 29 gedreht, wodurch die Stellverbindung der Schaltwelle 16 mit der ersten Schaltstange 14 gelöst und der zweite Schaltfinger 20 in Eingriff mit der äußeren Mitnahmeöffnung 18a der zweiten Schaltstange 15 gebracht wird (siehe Fig. 20.2d).

Abschließend wird die zweite Schaltstange 15 mittels der Schaltwelle 16 um einen Schaltwegabstand b in Richtung des zweiten Schaltpakets S2* gemäß dem Pfeil 28 axial verschoben, wodurch die erste Eingangsstufe E1 ausgelegt und die zweite Schaltstange 15 in ihre Neutralstellung N gebracht wird (siehe Fig. 20.2e). Bedarfsweise wird dann noch die zweite Reibungskupplung K2 geschlossen.

### Bezugszeichen

- 1: Gruppengetriebe
- 1': Gruppengetriebe
- 1*: Gruppengetriebe
- 2: Triebwelle
- 3: Kupplungskorb
- 4: Erste Eingangswelle
- 5: Zweite Eingangswelle
- 6a, 6b: Vorgelegewelle
- 7: Hauptwelle
- 8: Sonnenrad
- 9: Planetenträger
- 10: Hohlrad
- 11: Gehäusebauteil
- 12: Ausgangswelle
- 13: Schaltvorrichtung
- 13': Schaltvorrichtung
- 13*: Schaltvorrichtung
- 14: Erste Schaltstange
- 15: Zweite Schaltstange
- 16: Schaltwelle
- 17a, 17b: Mitnahmeöffnung der ersten Schaltstange
- 18a, 18b: Mitnahmeöffnung der zweiten Schaltstange
- 19: Erster Schaltfinger
- 20: Zweiter Schaltfinger
- 21: Radialebene, Bezugsebene
- 22: Axialrichtungspfeil, Axialverschiebung
- 23: Axialrichtungspfeil, Axialverschiebung
- 24: Axialrichtungspfeil, Axialverschiebung
- 25: Drehrichtungspfeil, Drehung
- 26: Axialverschiebung
- 27: Drehung
- 28: Axialverschiebung
- 29: Drehung
- 30: Axialverschiebung
- a: Wählwinkelabstand
- b: Schaltwegabstand
- BG: Bereichsgruppe
- E1: Erste Eingangsstufe, Schaltstellung
- E1*: Irreguläre Schaltstellung von E1
- E2: Zweite Eingangsstufe, Schaltstellung
- E3: Dritte Eingangsstufe, Schaltstellung
- E4: Vierte Eingangsstufe, Schaltstellung
- HG: Hauptgetriebe
- H1: Erste Vorwärts-Hauptstufe
- H2: Zweite Vorwärts-Hauptstufe
- K1: Erste Reibungskupplung
- K2: Zweite Reibungskupplung
- L: Schaltstellung der Umschaltkupplung SB
- N: Neutralstellung, Schaltstellung
- R: Rückwärts-Hauptstufe
- S: Schaltstellung der Umschaltkupplung SB
- SB: Umschaltkupplung
- S1: Erstes Schaltpaket
- S1*: Erstes Schaltpaket
- S2: Zweites Schaltpaket
- S2': Zweites Schaltpaket
- S2*: Zweites Schaltpaket
- S3: Drittes Schaltpaket
- S4: Viertes Schaltpaket
- VG: Splitgruppe
- VG': Splitgruppe
- VG*: Splitgruppe

## Patentansprüche

1. Automatisiertes Gruppengetriebes mit einer Schaltvorrichtung (13, 13', 13*), wobei das Gruppengetriebe ein Hauptgetriebe (HG) und eine diesem vorgeschaltete Splitgruppe (VG, VG', VG*) mit mindestens einer gemeinsamen Vorgelegewelle (6a, 6b) umfasst, und dessen Splitgruppe (VG, VG', VG*) als ein Doppelkupplungsgetriebe mit zwei koaxial angeordneten Eingangswellen (4, 5) ausgebildet ist, die jeweils eingangsseitig über eine zugeordnete Reibungskupplung (K1, K2) mit der Triebwelle (2) eines Antriebsmotors und ausgangsseitig über zumindest eine schaltbare Eingangsstufe (E1, E2; E3, E4) mit der Vorgelegewelle (6a, 6b) verbindbar sind,
**dadurch gekennzeichnet, dass** jeder Eingangswelle (4, 5) jeweils eine achsparallel angeordnete und axial verschiebbare Schaltstange (14, 15) zugeordnet ist, die jeweils über eine Schaltgabel mit der Schaltmuffe eines zugeordneten Schaltpakets (S1, S2, S2', S1*, S2*) in Stellverbindung steht und mit mindestens einer Mitnahmeöffnung (17a, 17b, 18a, 18b) versehen ist, wobei eine Schaltwelle (16) achsparallel zu den Schaltstangen (14, 15) angeordnet ist, die mindestens einen Schaltfinger (19, 20) zum Eingriff in die Mitnahmeöffnungen (17a, 17b, 18a, 18b) der Schaltstangen (14, 15) aufweist und mittels eines Wählstellers um ihre Längsachse drehbar (25) sowie mittels eines Schaltstellers axial verschiebbar (24) ist, wobei die Splitgruppe (VG) zwei schaltbare Eingangsstufen (E1, E3; E2, E4) pro Eingangswelle (4, 5) aufweist, und jede Schaltstange (14, 15) jeweils mit zwei Mitnahmeöffnungen (17a, 17b; 18a, 18b) versehen ist, die in etwa die Breite des zugeordneten Schaltfingers (19, 20) der Schaltwelle (16) aufweisen und axial im doppelten Schaltwegabstand (2*b) der Schaltpakete (S1, S2) voneinander beabstandet und bezüglich der Neutralstellung (N, 21) der jeweiligen Schaltstange (14, 15) symmetrisch angeordnet sind, und die Schaltwelle (16) in zwei um einen Wählwinkelabstand (a) entfernte Wählstellungen, die jeweils einem Eingriff des zugeordneten Schaltfingers (19, 20) in eine Mitnahmeöffnung (17a, 17b; 18a, 18b) einer der Schaltstangen (14, 15) entsprechen, drehbar (25) und in fünf Schaltstellungen axial verschiebbar (24) ist, die axial im Schaltwegabstand (b) der Schaltpakete (S1, S2) voneinander beabstandet und bezüglich der Neutralstellung (21) der Schaltwelle (16) symmetrisch angeordnet sind.

2. Automatisiertes Gruppengetriebe mit einer Schaltvorrichtung (13, 13', 13*), wobei das Gruppengetriebe ein Hauptgetriebe (HG) und eine diesem vorgeschaltete Splitgruppe (VG, VG', VG*) mit mindestens einer gemeinsamen Vorgelegewelle (6a, 6b) umfasst, und dessen Splitgruppe (VG, VG', VG*) als ein Doppelkupplungsgetriebe mit zwei koaxial angeordneten Eingangswellen (4, 5) ausgebildet ist, die jeweils eingangsseitig über eine zugeordnete Reibungskupplung (K1, K2) mit der Triebwelle (2) eines Antriebsmotors und ausgangsseitig über zumindest eine schaltbare Eingangsstufe (E1, E2; E3, E4) mit der Vorgelegewelle (6a, 6b) verbindbar sind,
**dadurch gekennzeichnet, dass** jeder Eingangswelle (4, 5) jeweils eine achsparallel angeordnete und axial verschiebbare Schaltstange (14, 15) zugeordnet ist, die jeweils über eine Schaltgabel mit der Schaltmuffe eines zugeordneten Schaltpakets (S1, S2, S2', S1*, S2*) in Stellverbindung steht und mit mindestens einer Mitnahmeöffnung (17a, 17b, 18a, 18b) versehen ist, wobei eine Schaltwelle (16) achsparallel zu den Schaltstangen (14, 15) angeordnet ist, die mindestens einen Schaltfinger (19, 20) zum Eingriff in die Mitnahmeöffnungen (17a, 17b, 18a, 18b) der Schaltstangen (14, 15) aufweist und mittels eines Wählstellers um ihre Längsachse drehbar (25) sowie mittels eines Schaltstellers axial verschiebbar (24) ist, wobei die Splitgruppe (VG') zwei einer der Eingangswellen (4) zugeordnete Eingangsstufen (E1, E3) und nur eine einzige der anderen Eingangswelle (5) zugeordnete Eingangsstufe (E2) aufweist, und die dem zweistufigen Schaltpaket (S1) zugeordnete Schaltstange (14) mit nur einer Mitnahmeöffnung (17a) versehen ist, die in etwa die Breite des zugeordneten Schaltfingers (19) der Schaltwelle (16) aufweist und axial im Schaltwegabstand (b) des zugeordneten Schaltpakets (S1) in Schaltrichtung der Eingangsstufe (E2) des anderen Schaltpakets (S2') von der Neutralstellung (N, 21) der betreffenden Schaltstange (14) angeordnet ist, wobei die dem einstufigen Schaltpaket (S2') zugeordnete Schaltstange (15) mit zwei Mitnahmeöffnungen (18a, 18b) versehen ist, die in etwa die Breite des zugeordneten Schaltfingers (20) der Schaltwelle (16) aufweisen und axial im doppelten Schaltwegabstand (2*b) des zugeordneten Schaltpakets (S2') voneinander beabstandet und bezüglich der Neutralstellung (N, 21) der betreffenden Schaltstange (15) symmetrisch angeordnet sind, und die Schaltwelle (16) in zwei um einen Wählwinkelabstand (a) entfernte Wählstellungen, die jeweils einem Eingriff des zugeordneten Schaltfingers (19, 20) in eine Mitnahmeöffnung (17a, 18a, 18b) einer der Schaltstangen (14, 15) entsprechen, drehbar (25) und in vier Schaltstellungen axial verschiebbar ist, die axial im Schaltwegabstand (b) der Schaltpakete (S1, S2') voneinander beabstandet sind, von denen eine in der Neutralstellung (21) der Schaltwelle (16) liegt, zwei axial bezüglich der Neutralstellung (21) der Schaltwelle (16) auf der Seite der gemeinsamen Schaltrichtung (28) beider Schaltpakete (S1, S2') liegen, und eine axial bezüglich der Neutralstellung (21) der Schaltwelle (16) auf der Seite der nur in einem Schaltpaket (S1) vorhandenen Schaltrichtung liegt.

3. Automatisiertes Gruppengetriebe mit einer Schaltvorrichtung (13, 13', 13*), wobei das Gruppengetriebe ein Hauptgetriebe (HG) und eine diesem vorgeschaltete Splitgruppe (VG, VG', VG*) mit mindestens einer gemeinsamen Vorgelegewelle (6a, 6b) umfasst, und dessen Splitgruppe (VG, VG', VG*) als ein Doppelkupplungsgetriebe mit zwei koaxial angeordneten Eingangswellen (4, 5) ausgebildet ist, die jeweils eingangsseitig über eine zugeordnete Reibungskupplung (K1, K2) mit der Triebwelle (2) eines Antriebsmotors und ausgangsseitig über zumindest eine schaltbare Eingangsstufe (E1, E2; E3, E4) mit der Vorgelegewelle (6a, 6b) verbindbar sind,
**dadurch gekennzeichnet, dass** jeder Eingangswelle (4, 5) jeweils eine achsparallel angeordnete und axial verschiebbare Schaltstange (14, 15) zugeordnet ist, die jeweils über eine Schaltgabel mit der Schaltmuffe eines zugeordneten Schaltpakets (S1, S2, S2', S1*, S2*) in Stellverbindung steht und mit mindestens einer Mitnahmeöffnung (17a, 17b, 18a, 18b) versehen ist, wobei eine Schaltwelle (16) achsparallel zu den Schaltstangen (14, 15) angeordnet ist, die mindestens einen Schaltfinger (19, 20) zum Eingriff in die Mitnahmeöffnungen (17a, 17b, 18a, 18b) der Schaltstangen (14, 15) aufweist und mittels eines Wählstellers um ihre Längsachse drehbar (25) sowie mittels eines Schaltstellers axial verschiebbar (24) ist, wobei die Splitgruppe (VG*) zwei einer der Eingangswellen (5) zugeordnete Eingangsstufen (E1, E3) und nur eine der anderen Eingangswelle (4) zugeordnete Eingangsstufe (E2) aufweist, von denen die axial mittig angeordnete Eingangsstufe (E1) vorzugsweise als Anfahr-Eingangsstufe ausgebildet und irregulär auch mit der anderen Eingangswelle (4) verbindbar ist, die dem regulär zweistufigen Schaltpaket (S2*) zugeordnete Schaltstange (15) mit nur einer Mitnahmeöffnung (18a) versehen ist, die in etwa die Breite des zugeordneten Schaltfingers (20) der Schaltwelle (16) aufweist und axial im Schaltwegabstand (b) des zugeordneten Schaltpakets (S2*) in Schaltrichtung der regulären Eingangsstufe (E2) des anderen Schaltpakets (S1*) bezüglich der Neutralstellung (N, 21) der betreffenden Schaltstange (15) angeordnet ist, wobei die dem irregulär zweistufigen Schaltpaket (S1*) zugeordnete Schaltstange (14) mit zwei Mitnahmeöffnungen (17a, 17b) versehen ist, die in etwa die Breite des zugeordneten Schaltfingers (19) der Schaltwelle (16) aufweisen und axial im doppelten Schaltwegabstand (2*b) des Schaltpakets (S1*) voneinander beabstandet und bezüglich der Neutralstellung (N, 21) der betreffenden Schaltstange (14) symmetrisch angeordnet sind, und die Schaltwelle (16) in zwei um einen Wählwinkelabstand (a) entfernte Wählstellungen, die jeweils einem Eingriff des zugeordneten Schaltfingers (19, 20) in eine Mitnahmeöffnung (17a, 17b, 18a) einer der Schaltstangen (14, 15) entsprechen, drehbar und in vier Schaltstellungen axial verschiebbar (25) ist, die im Schaltwegabstand (b) der Schaltpakete (S1*, S2*) axial voneinander beabstandet sind, von denen eine in der Neutralstellung (21) der Schaltwelle (16) liegt, zwei axial bezüglich der Neutralstellung (21) der Schaltwelle (16) auf der Seite der gemeinsamen regulären Schaltrichtung (26) beider Schaltpakete (S1*, S2*) liegen, und eine axial bezüglich der Neutralstellung (21) der Schaltwelle (16) auf der Seite der in dem einen Schaltpaket (S1*) irregulär vorhandenen Schaltrichtung (28) liegt.

4. Automatisiertes Gruppengetriebe nach einem der Ansprüche 1 bis 3, **dadurch gekennzeichnet, dass** eine Umschaltvorrichtung vorgesehen ist, mittels der ein gemeinsamer Wählsteller des Hauptgetriebes (HG) und der Splitgruppe (VG, VG', VG*) zwischen einer Stellverbindung mit einer Schaltwelle des Hauptgetriebes (HG) und der Schaltwelle (16) der Splitgruppe (VG, VG', VG*) umschaltbar ist.

5. Verfahren zur Schaltsteuerung eines automatisierten Gruppengetriebes (1, 1', 1*) mit einer Schaltvorrichtung (13, 13', 13*) gemäß einem der Ansprüche 1 bis 4, bei dem ein Wechsel der lastführenden Eingangsstufe (E1, E2, E3, E4) jeweils als Lastschaltung innerhalb der Splitgruppe (VG, VG', VG*) erfolgt, **dadurch gekennzeichnet, dass** bei einem Wechsel von einer der einen Eingangswelle (4) zugeordneten Last-Eingangsstufe (E1) zu einer der anderen Eingangswelle (5) zugeordneten Ziel-Eingangsstufe (E2), ausgehend von einer Stellverbindung der Schaltwelle (16) mit der in ihrer Neutralstellung (N, 21) befindlichen Schaltstange (15) der nicht lastführenden Eingangswelle (5), zunächst diese Schaltstange (15) um einen Schaltwegabstand (b) bis in die Schaltstellung der Ziel-Eingangsstufe (E2) axial verschoben wird (26), daraufhin zeitlich überschnitten die der Last-Eingangsstufe (E1) zugeordnete Reibungskupplung (K1) geöffnet und die der Ziel-Eingangsstufe (E2) zugeordnete Reibungskupplung (K2) geschlossen wird, dann durch eine Drehung (27) der Schaltwelle (16) um den Wählwinkelabstand (a) die Stellverbindung der Schaltwelle (16) mit der Schaltstange (15) der jetzt lastführenden Eingangswelle (5) gelöst und eine Stellverbindung mit der Schaltstange (14) der zuvor lastführenden Eingangswelle (4) hergestellt wird, und abschließend diese Schaltstange (14) um einen Schaltwegabstand (b) bis in ihre Neutralstellung (N, 21) axial verschoben wird (28).

6. Verfahren nach Anspruch 5, **dadurch gekennzeichnet, dass** bei einem Wechsel von einer der einen Eingangswelle (4) zugeordneten Last-Eingangsstufe (E3) zu einer derselben Eingangswelle (4) zugeordneten Ziel-Eingangsstufe (E1) zunächst eine Schaltung in eine der anderen Eingangswelle (5) zugeordnete, vorzugsweise eine mittlere Übersetzung aufweisende Zwischen-Eingangsstufe (E2) stattfindet und anschließend eine Schaltung in die Ziel-Eingangsstufe (E1) erfolgt, wobei die betreffende Schaltstange (14) beim Umschalten des zugeordneten Schaltpakets (S1) von der Last-Eingangsstufe (E3) zu der Ziel-Eingangsstufe (E1) um den doppelten Schaltwegabstand (2*b) axial verschoben wird (30).

7. Verfahren nach Anspruch 5 oder 6, dass bei einer passiv schließbaren Ausbildung der Reibungskupplungen (K1, K2) zuerst die der nicht lastführenden Eingangswelle (5) zugeordnete Reibungskupplung (K2) geöffnet und abschließend die der zuvor lastführenden Eingangswelle (4) zugeordnete Reibungskupplung (K1) geschlossen wird.

8. Verfahren nach einem der Ansprüche 5 bis 7 zum Schalten einer Schaltvorrichtung nach Anspruch 4, **dadurch gekennzeichnet, dass** zu Beginn eines Anfahrvorgangs, ausgehend von beiden geöffneten Reibungskupplungen (K1, K2), einer in dem Schaltpaket (S2*) der einen Schaltstange (15) regulär eingelegten Anfahr-Eingangsstufe (E1), und einer Stellverbindung der Schaltwelle (16) mit der in ihrer Neutralstellung (N, 21) befindlichen anderen Schaltstange (14), diese Schaltstange (14) um einen Schaltwegabstand (b) bis in die Schaltstellung der irregulär einlegbaren Anfahr-Eingangsstufe (E1) axial verschoben wird, und daraufhin beide Reibungskupplungen (K1, K2) simultan zumindest teilweise geschlossen werden.

9. Verfahren nach Anspruch 8, **dadurch gekennzeichnet, dass** im weiteren Verlauf des Anfahrvorgangs zunächst die der Schaltstange (14) der irregulär eingelegten Anfahr-Eingangsstufe (E1) zugeordnete Reibungskupplung (K1) geöffnet wird, dann diese Schaltstange (14) um den doppelten Schaltwegabstand (2*b) bis in die Schaltstellung der höheren Eingangsstufe (E2) desselben Schaltpakets (S1*) axial verschoben wird, daraufhin zeitlich überschnitten die der Anfahr-Eingangsstufe (E1) zugeordnete Reibungskupplung (K2) geöffnet und die der höheren Eingangsstufe (E2) zugeordnete Reibungskupplung (K1) geschlossen wird, dann durch eine Drehung (29) der Schaltwelle (16) um den Wählwinkelabstand (a) die Stellverbindung der Schaltwelle (16) mit der Schaltstange (14) der jetzt lastführenden Eingangswelle (14) gelöst und eine Stellverbindung mit der Schaltstange (15) der zuvor lastführenden Eingangswelle (5) hergestellt wird, und abschließend diese Schaltstange (15) um einen Schaltwegabstand (b) bis in ihre Neutralstellung (N, 21) axial verschoben (28) wird.

## Claims

1. Automated group transmission with a shifting device (13, 13', 13*), the group transmission comprising a main transmission (HG) and a split group (VG, VG', VG*) preceding the latter and having at least one common countershaft (6a, 6b), and its split group (VG, VG', VG*) being designed as a dual clutch transmission with two coaxially arranged input shafts (4, 5) which are in each case connectable on the input side, via an assigned friction clutch (K1, K2), to the drive shaft (2) of an engine and at the output side, via at least one shiftable input stage (E1, E2; E3, E4), to the countershaft (6a, 6b), **characterized in that** each input shaft (4, 5) is assigned in each case an axially parallel arranged and axially displaceable shift rod (14, 15) which is in actuating connection in each case via a shift fork with the shift sleeve of an assigned shift assembly (S1, S2, S2', S1*, S2*) and is provided with at least one take-up orifice (17a, 17b, 18a, 18b), there being arranged axially parallel to the shift rods (14, 15) a shift shaft (16) which has at least one shift finger (19, 20) for engagement into the take-up orifices (17a, 17b, 18a, 18b) of the shift rods (14, 15) and is rotatable (25) about its longitudinal axis by means of a selection actuator and also is displaceable (24) axially by means of a shift actuator, the split group (VG) having two shiftable input stages (E1, E3; E2, E4) per input shaft (4, 5), and each shift rod (14, 15) being provided in each case with two take-up orifices (17a, 17b, 18a, 18b) which have approximately the width of the assigned shift finger (19, 20) of the shift shaft (16) and are arranged so as to be spaced apart from one another axially at double the shift-travel distance (2*b) of the shift assemblies (S1, S2) and are arranged symmetrically in relation to the neutral position (N, 21) of the respective shift rod (14, 15), and the shift shaft (16) being rotatable (25) into two selection positions, remote by the amount of a selection-angle distance (a) and corresponding in each case to engagement of the assigned shift finger (19, 20) into a take-up orifice (17a, 17b, 18a, 18b) of one of the shift rods (14, 15), and being displaceable (24) axially into five shift positions which are spaced apart from one another axially at the shift-travel distance (b) of the shift assemblies (S1, S2) and are arranged symmetrically in relation to the neutral position (21) of the shift shaft (16).

2. Automated group transmission with a shifting device (13, 13', 13*), the group transmission comprising a main transmission (HG) and a split group (VG, VG', VG*) preceding the latter and having at least one common countershaft (6a, 6b), and its split group (VG, VG', VG*) being designed as a dual clutch transmission with two coaxially arranged input shafts (4, 5) which are in each case connectable on the input side, via an assigned friction clutch (K1, K2), to the drive shaft (2) of an engine and on the output side, via at least one shiftable input stage (E1, E2; E3, E4), to the countershaft (6a, 6b), **characterized in that** each input shaft (4, 5) is assigned in each case an axially parallel arranged and axially displaceable shift rod (14, 15) which is in actuating connection in each case via a shift fork with the shift sleeve of an assigned shift assembly (S1, S2, S2', S1*, S2*) and is provided with at least one take-up orifice (17a, 17b, 18a, 18b), there being arranged axially parallel to the shift rods (14, 15) a shift shaft (16) which has at least one shift finger (19, 20) for engagement into the take-up orifices (17a, 17b, 18a, 18b) of the shift rods (14, 15) and is rotatable (25) about its longitudinal axis by means of a selection actuator and also is displaceable (24) axially by means of a shift actuator, the split group (VG') having two input stages (E1, E3) assigned to one of the input shafts (4) and only a single input stage (E2) assigned to the other input shaft (5), and the shift rod (14) assigned to the two-stage shift assembly (S1) being provided with only one take-up orifice (17a) which has approximately the width of the assigned shift finger (19) of the shift shaft (16) and is arranged axially at the shift-travel distance (b) of the assigned shift assembly (S1), in the shifting direction of the input stage (E2) of the other shift assembly (S2'), from the neutral position (N, 21) of the respective shift rod (14), the shift rod (15) assigned to the single-stage shift assembly (S2') being provided with two take-up orifices (18a, 18b) which have approximately the width of the assigned shift finger (20) of the shift shaft (16) and are arranged so as to be spaced apart from one another axially at double the shift-travel distance (2*b) of the assigned shift assembly (S2') and are arranged symmetrically in relation to the neutral position (N, 21) of the respective shift rod (15), and the shift shaft (16) being rotatable (25) into two selection positions, remote by the amount of a selection-angle distance (a) and corresponding in each case to engagement of the assigned shift finger (19, 20) into a take-up orifice (17a, 18a, 18b) of one of the shift rods (14, 15), and being displaceable axially into four shift positions which are spaced apart from one another axially at the shift-travel distance (b) of the shift assemblies (S1, S2') and of which one lies in the neutral position (21) of the shift shaft (16), two lie axially in relation to the neutral position (21) of the shift shaft (16) on the side of the common shifting direction (28) of both shift assemblies (S1, S2') and one lies axially in relation to the neutral position (21) of the shift shaft (16) on the side of the shifting direction present only in one shift assembly (S1).

3. Automated group transmission with a shifting device (13, 13', 13*), the group transmission comprising a main transmission (HG) and a split group (VG, VG', VG*) preceding the latter and having at least one common countershaft (6a, 6b), and its split group (VG, VG', VG*) being designed as a dual clutch transmission with two coaxially arranged input shafts (4, 5) which are in each case connectable on the input side, via an assigned friction clutch (K1, K2), to the drive shaft (2) of an engine and on the output side, via at least one shiftable input stage (E1, E2; E3, E4), to the countershaft (6a, 6b), **characterized in that** each input shaft (4, 5) is assigned in each case an axially parallel arranged and axially displaceable shift rod (14, 15) which is in actuating connection in each case via a shift fork with the shift sleeve of an assigned shift assembly (S1, S2, S2', S1*, S2*) and is provided with at least one take-up orifice (17a, 17b, 18a, 18b), there being arranged axially parallel to the shift rods (14, 15) a shift shaft (16) which has at least one shift finger (19, 20) for engagement into the take-up orifices (17a, 17b, 18a, 18b) of the shift rods (14, 15) and is rotatable (25) about its longitudinal axis by means of a selection actuator and also is displaceable (24) axially by means of a shift actuator, the split group (VG*) having two input stages (E1, E3) assigned to one of the input shafts (5) and only one input stage (E2) assigned to the other input shaft (4), of which the axially centrally arranged input stage (E1) is preferably designed as a starting input stage and is also connectable irregularly to the other input shaft (4), the shift rod (15) assigned to the regularly two-stage shift assembly (S2*) being provided with only one take-up orifice (18a) which has approximately the width of the assigned shift finger (20) of the shift shaft (16) and is arranged axially at the shift-travel distance (b) of the assigned shift assembly (S2*), in the shifting direction of the regular input stage (E2) of the other shift assembly (S1*), in relation to the neutral position (N, 21) of the respective shift rod (15), the shift rod (14) assigned to the irregularly two-stage shift assembly (S1*) being provided with two take-up orifices (17a, 17b) which are approximately the width of the assigned shift finger (19) of the shift shaft (16) and are arranged so as to be spaced apart from one another axially at double the shift-travel distance (2*b) of the shift assembly (S1*) and are arranged symmetrically in relation to the neutral position (N, 21) of the respective shift rod (14), and the shift shaft (16) being rotatable into two selection positions, remote by the amount of a selection-angle distance (a) and corresponding in each case to engagement of the assigned shift finger (19, 20) into a take-up orifice (17a, 17b, 18a) of one of the shift rods (14, 15), and being displaceable (25) axially into four shift positions which are spaced apart from one another axially at the shift-travel distance (b) of the shift assemblies (S1*, S2*) and of which one lies in the neutral position (21) of the shift shaft (16), two lie axially in relation to the neutral position (21) of the shift shaft (16) on the side of the common regular shifting direction (26) of both shift assemblies (S1*, S2*) and one lies axially in relation to the neutral position (21) of the shift shaft (16) on the side of the shifting direction (28) present irregularly in the one shift assembly (S1*).

4. Automated group transmission according to one of Claims 1 to 3, **characterized in that** a changeover device is provided, by means of which a common selection actuator of the main transmission (HG) and of the split group (VG, VG', VG*) can be changed over between an actuating connection to a shift shaft of the main transmission (HG) and an actuating connection to the shift shaft (16) of the split group (VG, VG', VG*).

5. Method for the shifting control of an automated group transmission (1, 1', 1*) with a shifting device (13, 13', 13*) according to one of Claims 1 to 4, in which a change of the load-managing input stage (E1, E2, E3, E4) takes place in each case as a load shift within the split group (VG, VG', VG*), **characterized in that**, during a change from a load input stage (E1) assigned to one input shaft (4) to a target input stage (E2) assigned to the other input shaft (5), starting from an actuating connection of the shift shaft (16) to the shift rod (15), located in its neutral position (N, 21), of the non-load-managing input shaft (5), first this shift rod (15) is displaced (26) axially by the amount of a shift-travel distance (b) into the shift position of the target input stage (E2) thereupon, with a time overlap, the friction clutch (K1) assigned to the load input stage (E1) is opened and the friction clutch (K2) assigned to the target input stage (E2) is closed, then, by rotation (27) of the shift shaft (16) by the amount of the selection-angle distance (a), the actuating connection of the shift shaft (16) to the shift rod (15) of the then load-managing input shaft (5) is released and an actuating connection to the shift rod (14) of the previously load-managing input shaft (4) is made, and finally this shift rod (14) is displaced (28) axially by the amount of a shift-travel distance (b) into its neutral position (N, 21).

6. Method according to Claim 5, **characterized in that**, during a change from a load input stage (E3) assigned to one input shaft (4) to a target input stage (E1) assigned to the same input shaft (4), first a shift into an intermediate input stage (E2) assigned to the other input shaft (5) and preferably having a medium step-up takes place, and subsequently a shift into the target input stage (E1) occurs, the respective shift rod (14) being displaced (30) axially by the amount of double the shift-travel distance (2*b) during the changeover of the assigned shift assembly (S1) from the load input stage (E3) to the target input stage (E1).

7. Method according to Claim 5 or 6, **characterized in that**, when the friction clutches (K1, K2) are of the passively closable type, first the friction clutch (K2) assigned to the non-load-managing input shaft (5) is opened and finally the friction clutch (K1) assigned to the previously load-managing input shaft (4) is closed.

8. Method according to one of Claims 5 to 7 for shifting a shifting device according to Claim 4, **characterized in that**, at the commencement of a starting operation, with both friction clutches (K1, K2) being open, with a starting input stage (E1) selected regularly in the shift assembly (S2*) of one shift rod (15) and with an actuating connection of the shift shaft (16) to the other shift rod (14) located in its neutral position (N, 21), this shift rod (14) is displaced axially by the amount of a shift-travel distance (b) into the shift position of the irregularly selectable starting input stage (E1), and thereupon both friction clutches (K1, K2) are at least partially closed simultaneously.

9. Method according to Claim 8, **characterized in that**, as the starting operation proceeds, first the friction clutch (K1) assigned to the shift rod (14) of the irregularly selected starting input stage (E1) is opened, then this shift rod (14) is displaced axially by the amount of double the shift-travel distance (2*b) into the shift position of the higher input stage (E2) of the same shift assembly (S1*), thereupon, with a time overlap, the friction clutch (K2) assigned to the starting input stage (E1) is opened and the friction clutch (K1) assigned to the higher input stage (E2) is closed, then, by rotation (29) of the shift shaft (16) by the amount of the selection-angle distance (a), the actuating connection of the shift shaft (16) to the shift rod (14) of the then load-managing input shaft (14) is released and an actuating connection to the shift rod (15) of the previously load-managing input shaft (5) is made, and finally this shift rod (15) is displaced (28) axially by the amount of a shift-travel distance (b) into its neutral position (N, 21).

## Revendications

1. Transmission à groupe relais automatisée comprenant un dispositif de changement de vitesses (13, 13', 13*), la transmission à groupe relais comprenant une transmission principale (HG) et un doubleur de gamme (VG, VG', VG*) monté en amont de celle-ci avec au moins un arbre intermédiaire commun (6a, 6b) et dont le doubleur de gamme (VG, VG', VG*) est réalisé sous forme de transmission à double embrayage avec deux arbres d'entrée (4, 5) disposés coaxialement qui peuvent être à chaque fois connectés du côté de l'entrée par le biais d'un embrayage à friction associé (K1, K2) à l'arbre d'entraînement (2) d'un moteur d'entraînement et du côté de la sortie par le biais d'au moins un étage d'entrée commutable (E1, E2 ; E3, E4) à l'arbre intermédiaire (6a, 6b), **caractérisée en ce qu'**à chaque arbre d'entrée (4, 5) est à chaque fois associée une tige de commande (14, 15) disposée avec son axe parallèle et déplaçable axialement, laquelle est à chaque fois en liaison de commande avec le manchon coulissant d'un bloc de commutation associé (S1, S2, S2', S1*, S2*) par le biais d'une fourchette de changement de vitesses et est pourvue d'au moins une ouverture d'entraînement (17a, 17b, 18a, 18b), un arbre de changement de vitesses (16) étant disposé avec son axe parallèle aux tiges de commande (14, 15), lequel présente au moins un doigt de commande (19, 20) pour l'engagement dans les ouvertures d'entraînement (17a, 17b, 18a, 18b) des tiges de commande (14, 15) et peut être tourné (25) autour de son axe longitudinal au moyen d'un actionneur de sélection et peut être déplacé axialement (24) au moyen d'un actionneur de changement de vitesses, le doubleur de gamme (VG) présentant deux étages d'entrée commutables (E1, E3 ; E2, E4) par arbre d'entrée (4, 5) et chaque tige de commande (14, 15) étant pourvue à chaque fois de deux ouvertures d'entraînement (17a, 17b ; 18a, 18b), qui présentent approximativement la largeur du doigt de commande associé (19, 20) de l'arbre de changement de vitesses (16) et qui sont espacées l'une de l'autre axialement de la double distance de course de commutation (2*b) des blocs de commutation (S1, S2) et sont disposées symétriquement par rapport à la position neutre (N, 21) de la tige de commande respective (14, 15), et l'arbre de changement de vitesses (16) pouvant tourner (25) dans deux positions de sélection éloignées d'une distance angulaire de sélection (a) qui correspondent à chaque fois à un engagement du doigt de commande associé (19, 20) dans une ouverture d'entraînement (17a, 17b ; 18a, 18b) de l'une des tiges de commande (14, 15), et pouvant être déplacé axialement (24) dans cinq positions de changement de vitesses, lesquelles sont espacées les unes des autres axialement de la distance de course de commutation (b) des blocs de commutation (S1, S2) et sont disposées symétriquement par rapport à la position neutre (21) de l'arbre de changement de vitesses (16).

2. Transmission à groupe relais automatisée comprenant un dispositif de changement de vitesses (13, 13', 13*), la transmission à groupe relais comprenant une transmission principale (HG) et un doubleur de gamme (VG, VG', VG*) monté en amont de celle-ci avec au moins un arbre intermédiaire commun (6a, 6b) et dont le doubleur de gamme (VG, VG', VG*) est réalisé sous forme de transmission à double embrayage avec deux arbres d'entrée (4, 5) disposés coaxialement qui peuvent être à chaque fois connectés du côté de l'entrée par le biais d'un embrayage à friction associé (K1, K2) à l'arbre d'entraînement (2) d'un moteur d'entraînement et du côté de la sortie par le biais d'au moins un étage d'entrée commutable (E1, E2 ; E3, E4) à l'arbre intermédiaire (6a, 6b), **caractérisée en ce qu'**à chaque arbre d'entrée (4, 5) est à chaque fois associée une tige de commande (14, 15) disposée avec son axe parallèle et déplaçable axialement, laquelle est à chaque fois en liaison de commande avec le manchon coulissant d'un bloc de commutation associé (S1, S2, S2', S1*, S2*) par le biais d'une fourchette de changement de vitesses et est pourvue d'au moins une ouverture d'entraînement (17a, 17b, 18a, 18b), un arbre de changement de vitesses (16) étant disposé avec son axe parallèle aux tiges de commande (14, 15), lequel présente au moins un doigt de commande (19, 20) pour l'engagement dans les ouvertures d'entraînement (17a, 17b, 18a, 18b) des tiges de commande (14, 15) et peut être tourné (25) autour de son axe longitudinal au moyen d'un actionneur de sélection et peut être déplacé axialement (24) au moyen d'un actionneur de changement de vitesses, le doubleur de gamme (VG') présentant deux étages d'entrée (E1, E3) associés à l'un des arbres d'entrée (4) et seulement un étage d'entrée unique (E2) associé à l'autre arbre d'entrée (5) et la tige de commande (14) associée au bloc de commutation à deux étages (S1) étant pourvue d'une seule ouverture d'entraînement (17a) qui présente approximativement la largeur du doigt de commande associé (19) de l'arbre de changement de vitesses (16) et qui est disposée axialement dans la distance de course de commutation (b) du bloc de commutation associé (S1) dans la direction de commutation de l'étage d'entrée (E2) de l'autre bloc de commutation (S2') depuis la position neutre (N, 21) de la tige de commande concernée (14), la tige de commande (15) associée au bloc de commutation à un étage (S2') étant pourvue de deux ouvertures d'entraînement (18a, 18b) qui présentent approximativement la largeur du doigt de commande associé (20) de l'arbre de changement de vitesses (16) et qui sont espacées l'une de l'autre axialement de la double distance de course de commutation (2*b) du bloc de commutation associé (S2') et sont disposées symétriquement par rapport à la position neutre (N, 21) de la tige de commande concernée (15), et l'arbre de changement de vitesses (16) pouvant tourner (25) dans deux positions de sélection éloignées d'une distance angulaire de sélection (a) qui correspondent à chaque fois à un engagement du doigt de commande associé (19, 20) dans une ouverture d'entraînement (17a, 18a, 18b) de l'une des tiges de commande (14, 15), et pouvant être déplacé axialement dans quatre positions de changement de vitesses, lesquelles sont espacées les unes des autres axialement de la distance de course de commutation (b) des blocs de commutation (S1, S2'), dont l'une est située dans la position neutre (21) de l'arbre de changement de vitesses (16), deux sont situées axialement par rapport à la position neutre (21) de l'arbre de changement de vitesses (16) du côté de la direction de commutation commune (28) des deux blocs de commutation (S1, S2'), et l'une est située axialement par rapport à la position neutre (21) de l'arbre de changement de vitesses (16) du côté de la direction de commutation prévue uniquement dans un bloc de commutation (S1).

3. Transmission à groupe relais automatisée comprenant un dispositif de changement de vitesses (13, 13', 13*), la transmission à groupe relais comprenant une transmission principale (HG) et un doubleur de gamme (VG, VG', VG*) monté en amont de celle-ci avec au moins un arbre intermédiaire commun (6a, 6b) et dont le doubleur de gamme (VG, VG', VG*) est réalisé sous forme de transmission à double embrayage avec deux arbres d'entrée (4, 5) disposés coaxialement qui peuvent être à chaque fois connectés du côté de l'entrée par le biais d'un embrayage à friction associé (K1, K2) à l'arbre d'entraînement (2) d'un moteur d'entraînement et du côté de la sortie par le biais d'au moins un étage d'entrée commutable (E1, E2 ; E3, E4) à l'arbre intermédiaire (6a, 6b), **caractérisée en ce qu'**à chaque arbre d'entrée (4, 5) est à chaque fois associée une tige de commande (14, 15) disposée avec son axe parallèle et déplaçable axialement, laquelle est à chaque fois en liaison de commande avec le manchon coulissant d'un bloc de commutation associé (S1, S2, S2', S1*, S2*) par le biais d'une fourchette de changement de vitesses et est pourvue d'au moins une ouverture d'entraînement (17a, 17b, 18a, 18b), un arbre de changement de vitesses (16) étant disposé avec son axe parallèle aux tiges de commande (14, 15), lequel présente au moins un doigt de commande (19, 20) pour l'engagement dans les ouvertures d'entraînement (17a, 17b, 18a, 18b) des tiges de commande (14, 15) et peut être tourné (25) autour de son axe longitudinal au moyen d'un actionneur de sélection et peut être déplacé axialement (24) au moyen d'un actionneur de changement de vitesses, le doubleur de gamme (VG*) présentant deux étages d'entrée (E1, E3) associés à l'un des arbres d'entrée (5) et seulement un étage d'entrée (E2) associé à l'autre arbre d'entrée (4), dont l'étage d'entrée (E1) disposé axialement centralement est réalisé de préférence sous forme d'étage d'entrée de démarrage et peut être connecté de manière irrégulière également à l'autre arbre d'entrée (4), la tige de commande (15) associée au bloc de commutation régulièrement à deux étages (S2*) étant pourvue d'une seule ouverture d'entraînement (18a) qui présente approximativement la largeur du doigt de commande associé (20) de l'arbre de changement de vitesses (16) et qui est disposée axialement dans la distance de course de commutation (b) du bloc de commutation associé (S2*) dans la direction de commutation de l'étage d'entrée régulier (E2) de l'autre bloc de commutation (S1*) par rapport à la position neutre (N, 21) de la tige de commande concernée (15), la tige de commande (14) associée au bloc de commutation irrégulièrement à deux étages (S1*) étant pourvue de deux ouvertures d'entraînement (17a, 17b) qui présentent approximativement la largeur du doigt de commande associé (19) de l'arbre de changement de vitesses (16) et qui sont espacées l'une de l'autre axialement de la double distance de course de commutation (2*b) du bloc de commutation (S1*) et sont disposées symétriquement par rapport à la position neutre (N, 21) de la tige de commande concernée (14) et l'arbre de changement de vitesses (16) pouvant tourner dans deux positions de sélection éloignées d'une distance angulaire de sélection (a) qui correspondent à chaque fois à un engagement du doigt de commande associé (19, 20) dans une ouverture d'entraînement (17a, 17b, 18a) de l'une des tiges de commande (14, 15), et pouvant être déplacé axialement (25) dans quatre positions de changement de vitesses, lesquelles sont espacées les unes des autres axialement de la distance de course de commutation (b) des blocs de commutation (S1*, S2*), dont l'une est située dans la position neutre (21) de l'arbre de changement de vitesses (16), deux sont situées axialement par rapport à la position neutre (21) de l'arbre de changement de vitesses (16) du côté de la direction de commutation commune régulière (26) des deux blocs de commutation (S1*, S2*), et l'une est située axialement par rapport à la position neutre (21) de l'arbre de changement de vitesses (16) du côté de la direction de commutation (28) prévue de manière irrégulière dans l'un des blocs de commutation (S1*).

4. Transmission à groupe relais automatisée selon l'une quelconque des revendications 1 à 3, **caractérisée en ce qu'**il est prévu un dispositif de commutation au moyen duquel un actionneur de sélection commun à la transmission principale (HG) et au doubleur de gamme (VG, VG', VG*) peut être commuté entre une position de commande avec un arbre de changement de vitesses de la transmission principale (HG) et l'arbre de changement de vitesses (16) du doubleur de gamme (VG, VG', VG*).

5. Procédé de commande de commutation d'une transmission à groupe relais automatisée (1, 1', 1*) comprenant un dispositif de changement de vitesses (13, 13', 13*) selon l'une quelconque des revendications 1 à 4, dans lequel un changement d'étage d'entrée guidant la charge (E1, E2, E3, E4) a lieu à chaque fois en tant que commutation de charge à l'intérieur du doubleur de gamme (VG, VG', VG*), **caractérisé en ce que** dans le cas d'un changement d'un étage d'entrée de charge (E1) associé à un arbre d'entrée (4) à un étage d'entrée cible (E2) associé à l'autre arbre d'entrée (5), à partir d'une connexion de commande de l'arbre de changement de vitesses (16) à la tige de commande (15) se trouvant dans sa position neutre (N, 21) de l'arbre d'entrée (5) ne guidant pas la charge, cette tige de commande (15) est tout d'abord déplacée axialement (26) d'une distance de course de commutation (b) jusque dans la position de commutation de l'étage d'entrée cible (E2), puis, avec un recoupement dans le temps, l'embrayage à friction (K1) associé à l'étage d'entrée de charge (E1) est ouvert et l'embrayage à friction (K2) associé à l'étage d'entrée cible (E2) est fermé, puis, par une rotation (27) de l'arbre de changement de vitesses (16) de la distance angulaire de sélection (a), la connexion de commande de l'arbre de changement de vitesses (16) à la tige de commande (15) de l'arbre d'entrée (5) à présent guidant la charge est libérée et une connexion de commande à la tige de commande (14) de l'arbre d'entrée (4) guidant préalablement la charge est établie, et finalement cette tige de commande (14) est déplacée axialement (28) d'une distance de course de commutation (b) jusque dans sa position neutre (N, 21).

6. Procédé selon la revendication 5, **caractérisé en ce que**, dans le cas d'un changement d'un étage d'entrée de charge (E3) associé à l'un des arbres d'entrée (4) à un étage d'entrée cible (E1) associé au même arbre d'entrée (4), tout d'abord une commutation se produit dans un étage d'entrée intermédiaire (E2) associé à l'autre arbre d'entrée (5), de préférence présentant un rapport de multiplication moyen, et ensuite a lieu une commutation dans l'étage d'entrée cible (E1), la tige de commande concernée (14), lors de la commutation du bloc de commutation associé (S1) de l'étage d'entrée de charge (E3) à l'étage d'entrée cible (E1) étant déplacée axialement (30) de la double distance de course de commutation (2*b).

7. Procédé selon la revendication 5 ou 6, **caractérisé en ce que** dans le cas d'une réalisation à fermeture passive des embrayages à friction (K1, K2), d'abord l'embrayage à friction (K2) associé à l'arbre d'entrée ne guidant pas la charge (5) est ouvert et ensuite l'embrayage à friction (K1) associé à l'arbre d'entrée guidant préalablement la charge (4) est fermé.

8. Procédé selon l'une quelconque des revendications 5 à 7, pour commuter un dispositif de changement de vitesses selon la revendication 4, **caractérisé en ce qu'**au début d'une opération de démarrage, à partir des deux embrayages à friction ouverts (K1, K2), d'un étage d'entrée de démarrage (E1) enclenché de manière régulière dans le bloc de commutation (S2*) de l'une des tiges de commande (15), et d'une connexion de commande de l'arbre de changement de vitesses (16) à l'autre tige de commande (14) se trouvant dans sa position neutre (N, 21), cette tige de commande (14) est déplacée axialement d'une distance de course de commutation (b) jusque dans la position de commutation de l'étage d'entrée de démarrage (E1) pouvant être enclenché de manière irrégulière, et ensuite les deux embrayages à friction (K1, K2) sont fermés au moins en partie simultanément.

9. Procédé selon la revendication 8, **caractérisé en ce qu'**au cours de l'opération de démarrage, tout d'abord l'embrayage à friction (K1) associé à la tige de commande (14) de l'étage d'entrée de démarrage enclenché de manière irrégulière (E1) est ouvert, puis cette tige de commande (14) est déplacée axialement de la double distance de course de commutation (2*b) jusque dans la position de commutation de l'étage d'entrée plus élevé (E2) du même bloc de commutation (S1*), puis, avec un recoupement dans le temps, l'embrayage à friction (K2) associé à l'étage d'entrée de démarrage (E1) est ouvert et l'embrayage à friction (K1) associé à l'étage d'entrée plus élevé (E2) est fermé, ensuite, par une rotation (29) de l'arbre de changement de vitesses (16) de la distance angulaire de sélection (a), la connexion de commande de l'arbre de changement de vitesses (16) à la tige de commande (14) de l'arbre d'entrée à présent guidant la charge (14) est libérée et une connexion de commande à la tige de commande (15) de l'arbre d'entrée guidant préalablement la charge (5) est établie, et finalement cette tige de commande (15) est déplacée axialement (28) d'une distance de course de commutation (b) jusque dans sa position neutre (N, 21).
